(19) Europäisches Patentamt
European Patent Office
Office européen des brevets

(11) Veröffentlichungsnummer: **0 130 451**
**B1**

(12) # EUROPÄISCHE PATENTSCHRIFT

(45) Veröffentlichungstag der Patentschrift: **30.03.88**

(21) Anmeldenummer: **84106928.9**

(22) Anmeldetag: **16.06.84**

(51) Int. Cl.⁴: **C 09 D 3/80**, C 08 G 18/62, C 08 G 18/79, C 08 G 18/72, C 09 D 3/72

(54) **Verfahren zur Herstellung von Überzügen.**

(30) Priorität: **24.06.83 DE 3322829**

(43) Veröffentlichungstag der Anmeldung: **09.01.85 Patentblatt 85/2**

(45) Bekanntmachung des Hinweises auf die Patenterteilung: **30.03.88 Patentblatt 88/13**

(84) Benannte Vertragsstaaten: **AT BE CH DE FR GB IT LI NL SE**

(56) Entgegenhaltungen:
**EP - A - 0 039 797**
**EP - A - 0 047 452**
**EP - A - 0 099 011**
**US - A - 3 200 007**

(73) Patentinhaber: **BASF Aktiengesellschaft, Carl-Bosch-Strasse 38, D-6700 Ludwigshafen (DE)**

(72) Erfinder: **Lenz, Werner, Dr., Heinrich-Baermann-Strasse 14, D-6702 Bad Duerkheim (DE)**
Erfinder: **Sander, Hans, Dr., Petersstrasse 2, D-6700 Ludwigshafen (DE)**
Erfinder: **Moeller, Dieter, Berentrup 5, D-4715 Ascheberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die vorliegende Erfindung betrifft ein Verfahren zur Herstellung von Überzügen unter Verwendung von Beschichtungsmitteln, welche als Bindemittel Umsetzungsprodukte von ausgewählten Polyhydroxypolyacrylatharzen mit Isocyanurat- und gegebenenfalls Biuretgruppen aufweisenden, gegebenenfalls teilweise oder vollständig mit CH-, NH- oder OH-aciden Blockierungsmitteln verkappten Polyisocyanaten einer Funktionalität zwischen 2,5 und 6, mit vorwiegend cycloaliphatisch und teilweise aliphatisch gebundenen Isocyanatgruppen enthalten.

In der DE-OS 1 720 265 ist ein Verfahren zur Herstellung von lichtbeständigen Überzügen auf der Basis von Umsetzungsprodukten von Polyhydroxypolyacrylatharzen, hergestellt durch Copolymerisation von Monoestern der Acrylsäure und/oder Methacrylsäure mit polyfunktionellen aliphatischen Alkoholen, Estern der Acrylsäure und/oder Methacrylsäure mit monofunktionellen aliphatischen Alkoholen und/oder anderen copolymerisierbaren olefinisch ungesättigten Monomeren in organischer Lösung beschrieben. Die hier angegebenen Bindemittelkombinationen aus hydroxylgruppenhaltigen Acrylatharzen mit biuretisiertem Triisocyanat ergeben hochglänzende, bei niedrigen Temperaturen rasch kratzfest aushärtende, elastische pigmentierte Lackfilme hervorragender Witterungsstabilität. Ein Nachteil dieser Lackmischungen ist allerdings die Tatsache, dass die eingesetzten biuretisierten Triisocyanate aufgrund ihrer Tendenz zur Rückspaltung in die zugrundeliegenden monomeren Diisocyanate und darüber hinaus ihrer ausgeprägten Inhalationstoxizität in Form von Sprühnebeln gewerbehygienisch nicht unbedenklich sind.

Aus der DE-AS 1 669 008 ist die Verwendung eines Gemisches aus einem hydroxylgruppenhaltigen Copolymerisat auf der Basis von Methylmethacrylat, Vinylaromaten, Monoacrylaten und/oder -methacrylaten von Alkanolen, anderen copolymerisierbaren olefinisch ungesättigten Monomeren, Monomeren mit mindestens einer Hydroxylgruppe im Molekül und eines tertiäre Aminogruppen enthaltenden Monomeren und wenigstens einem Polyisocyanat in organischer Lösung als Lack bekannt. Diese Lackmischungen ergeben harte, kratzfeste, schlagzähe, witterungsstabile, gut haftende, gegen Wasser, Lösungsmittel und Chemikalien beständige Filme von hohem Glanz. Als Härter werden hier u.a. urethan-, isocyanurat- und biuretgruppenhaltige aromatische oder aliphatische Polyisocyanate aufgeführt. Es findet sich jedoch kein Hinweis auf isocyanurathaltige, gewerbehygienisch weitgehend unbedenkliche Polyisocyanate mit vorwiegend cycloaliphatisch gebundenen Isocyanatgruppen. Als tertiäre Aminogruppen enthaltende Monomere werden solche mit aliphatischen tertiären Aminogruppen hoher Basizität erwähnt. Hierdurch wird zwar die Reaktion zwischen Polyisocyanat und Polyol beschleunigt, andererseits ist aber eine relativ geringe Säurebeständigkeit und eine starke Vergilbungsneigung der Lackfilme bei Bewitterung zu erwarten.

In den DE-AS 1 668 510, DE-OS 2 460 329, DE-AS 2 054 239, DE-AS 2 603 259, DE-AS 2 626 900, DE-AS 2 659 853 und DE-OS 2 851 613 sind ebenfalls Verfahren zur Herstellung von in organischer Lösung vorliegenden hydroxylgruppenhaltigen Copolymerisaten und zur Herstellung von Überzügen aus Bindemitteln auf Basis dieser Copolymerisate in Kombination mit aliphatischen biuretisierten Triisocyanaten beschrieben. Für die genannten Copolymerisate kommen als hydroxylgruppenhaltige Acrylatmonomere Umsetzungsprodukte von Acrylsäure und/oder Methacrylsäure mit dem Glycidylester einer verzweigten aliphatischen Carbonsäure mit 4 bis 26 C-Atomen und gegebenfalls Hydroxyalkylacrylate oder -methacrylate mit 2 bis 4 C-Atomen in der Alkylkette, als Comonomere Acrylsäure- und/oder Methacrylsäureester von Alkanolen mit 1 bis 12 C-Atomen und Styrol oder Alkylstyrol zum Einsatz. Die Einführung der seitenständigen Hydroxylgruppen über den Glycidylester erfolgt hierbei durch Einpolymerisieren von Acrylsäure und/oder Methacrylsäure und gleichzeitiger Veresterung der Carboxylgruppen mit der Glycidylverbindung.

Aus diesen Bindemittelkombinationen lassen sich ebenfalls hochglänzende, rasch härtende, kratzfeste, wasserfeste und elastische Lackfilme hoher Witterungsstabilität herstellen. Nachteilig ist aber wiederum die Tatsache, dass auch hierfür die obengenannten gewerbehygienisch nicht völlig unbedenklichen biuretisierten Triisocyanate verwendet werden.

In der DE-OS 2 836 612 wird ein Verfahren zur Herstellung von Überzügen auf Basis von Bindemitteln aus biuret-, urethan- oder isocyanuratgruppenhaltigen Lackpolyisocyanaten und hydroxylgruppenhaltigen Acrylatcopolymerisaten aus Hydroxylalkylacrylaten oder -methacrylaten mit 2 bis 4 C-Atomen im Hydroxyalkylrest, gegebenenfalls substituiertem Styrol und/oder Methylmethacrylat, Acrylsäure- und/oder Methacrylsäureester mit 1 bis 12 C-Atomen im Alkoholrest, gegebenenfalls $\alpha,\beta$-monoolefinisch ungesättigter Mono- oder Dicarbonsäure und Acryl- und/oder Methacrylnitril beschrieben. Die Vorteile dieses Verfahrens liegen vor allem darin, dass diese Bindemittelkombinationen sowohl klare, gut verträgliche Lackmischungen als auch glänzende, schnell trocknende, harte und ausreichend elastische Lackfilme ergeben, wobei die Realisierung dieser vorteilhaften anwendungstechnischen Eigenschaften, speziell der guten Verträglichkeit mit Isocyanuratgruppen enthaltenden Polyisocyanaten, zwingend die Verwendung von 5 bis 30 Gew.% Acrylnitril und/oder Methacrylnitril als Comonomere im hydroxylgruppenhaltigen Acrylatharz erfordert. Der Einsatz solcher nitrilgruppenhaltiger Copolymerisate in Polyurethan-Zweikomponenten-Lacken führt jedoch bei länger andauernder thermischer Belastung zu deutlicher Vergilbung und bei Bewitterung zur Kreidung der pigmentierten Lackfilme. In der Beschreibung ist auch erwähnt, dass als eines der bevorzugten Lackpolyisocyanate u.a. ein Isocyanuratgruppen aufweisendes Polyisocyanat auf Basis von IPDI, d.h. mit vorwiegend cycloaliphatisch gebundenen Isocyanatgruppen, in Kombination mit den Acrylatharzen eingesetzt werden kann. Derartige Bindemittelkombinationen sind aber weder in den Beispielen beschrieben, noch finden sich in der Beschreibung der DE-OS 2 836 612 irgendwelche Hinweise auf die Elastizität, den Härteanstieg in Abhängigkeit von der Zeit, sowie insbesondere die für den Einsatz in der Automobilreparaturlackierung äusserst wichtige Superbenzinfestigkeit der Lackfilme nach einer bestimmten Härtungsdauer.

Der DE-OS 2 900 592 sind Umsetzungsprodukte aus Glycidylgruppen enthaltenden Acrylatharzen und hydroxylgruppenhaltigen sekundären Monoaminen zu entnehmen, wobei die Acrylharze aus Glycidylacrylat und/oder -methacrylat, Vinylaromaten, Methylmethacrylat, Acrylnitril, Methacrylnitril, Acrylsäureestern mit 1 bis 12 und/oder Methacrylsäureestern mit 2 bis 12 C-Atomen im Alkoholrest, gegebenenfalls Hydroxylalkylacrylaten und/oder -methacrylaten mit 2 bis 4 C-Atomen im Hydroxyalkylrest und gegebenenfalls $\alpha,\beta$-monoolefinisch ungesättigten Mono- und/oder Dicarbonsäuren statisch copolymerisiert sind und als Vernetzungskomponenten in Kombination mit Polyisocyanaten, die auch Isocyanuratgruppen aufweisen können, verwendet werden. Die in dieser Anmeldung beanspruchte Acrylatharzkomponente beinhaltet also als funktionelle Gruppen ausser vorwiegend sekundären Hydroxylgruppen zwingend tertiäre Aminogruppen. Neben der guten Verträglichkeit dieser Bindemittelkombinationen mit aromatischen Lösungsmitteln werden vor allem die trotz der anwesenden tertiären Aminogruppen überraschend hohen Standzeiten hervorgehoben. Wie für den Fachmann leicht einzusehen, sind diese hohen Standzeiten der Lackmischungen vor allem darauf zurückzuführen, dass die Acrylatharze fast ausschliesslich sekundäre Hydroxylfunktionen als reaktive Gruppen enthalten. Daher ist es auch keineswegs überraschend, dass das im Vergleichsbeispiel beschriebene entsprechende Umsetzungsprodukt auf Basis von Diethanolamin, welches primäre Hydroxylgruppen enthält, gegenüber den in dieser DE-OS beschriebenen Copolymerisaten mit Polyisocyanaten zu geringe Topfzeiten ergibt. Nach dem hier beschriebenen Verfahren ist es also nicht möglich, für Zweikomponenten-Polyurethanlacke gut brauchbare Acrylatharze, die grössere Mengen primärer Hydroxylgruppen neben tertiären Aminogruppen enthalten, zu erhalten. Darüberhinaus besitzen Bindemittel, die stark basische aminogruppenhaltige Copolymerisate aufweisen, die Nachteile einer geringeren – z.B. für Automobilreparaturdecklacke aber dringend erforderlichen – Säurebeständigkeit, sowie starker Vergilbung bei längerer Bewitterung im Vergleich zu aminogruppenfreien Systemen.

Die DE-OS 3 010 719 betrifft ein Verfahren zur Herstellung von Metalleffektlackierungen verbesserter Witterungsstabilität unter Verwendung von Klarlacken als Decklacke, deren Bindemittel im wesentlichen als Polyolkomponente zwingend aromatenarme Polyesterole und gegebenenfalls Polyacrylatpolyole, als Polyisocyanatkomponente biuret- und/oder isocyanuratgruppenhaltige Addukte mit aliphatischen, gegebenenfalls blokkierten Isocyanatgruppen enthalten. Die hierin beschriebenen Klarlacke zeichnen sich speziell durch hohe Rissbeständigkeit bei Bewitterung aus. Der Beschreibung ist allerdings zu entnehmen, dass die Mischungen vorzugsweise dann eingesetzt werden, wenn die Lackhärtung unter Hitzeeinwirkung erfolgt, da bei diesen Bedingungen homogene, klare Lackfilme erhalten werden (vgl. Beispiel 6; Einbrenntemperatur: 80°C). Besonders gut für den Automobilreparatursektor geeignete Lacke müssen aber auch problemlos bei Raumtemperatur härtbar sein und in diesem Fall homogene Beschichtungen ergeben. Ein weiterer allgemeiner Nachteil der in dieser Anmeldung beschriebenen Kombinationen aus aromatenarmen Polyesterpolyolen und Polyisocyanaten ist die relativ langsame Antrocknung und Durchtrocknung solcher Systeme bei Raumtemperatur im Vergleich zu den rasch superbenzinfest trocknenden Polyacrylatpolyol/Polyisocyanat-Kombinationen. Die in den Beispielen der DE-OS 3 010 719 angeführten Lackmischungen werden demnach sämtlich nur bei 80°C, d.h. bei erhöhter Temperatur, ausgehärtet.

Die DE-OS 3 027 776 bezieht sich auf ein Verfahren zur Herstellung hydroxylgruppenhaltiger, mit $\varepsilon$-Caprolacton modifizierter und mit Polyisocyanaten vernetzbarer (Meth)acrylatharze. Diese Copolymerisate ergeben auch in Kombination mit isocyanuratgruppenhaltigem Polyisocyanat auf Basis von Isophorondiisocyanat – mit vorwiegend cycloaliphatisch gebundenen Isocyanatgruppen – harte, witterungsstabile, gut auf Metall haftende, elastische, wasser- und chemikalienbeständige Überzüge. Die hier beschriebenen Systeme haben allerdings den Nachteil, dass sie im Falle der Verwendung cycloaliphatischer Polyisocyanate bei hohen Temperaturen (zwischen 110 und 150°C) eingebrannt werden müssen, d.h. für die Automobilreparaturlackierung nicht in Frage kommen.

Die DE-OS 3 137 133 betrifft ein Verfahren zur Herstellung von Überzügen durch Umsetzung von Polyhydroxypoly(meth)acrylatharzen, die aus Hydroxyalkyl(meth)acrylaten mit primären Hydroxylgruppen sowie 4 bis 10 C-Atomen in der Alkylenhauptkette und speziellen Acrylsäure- bzw. Methacrylsäureestern als Comonomeren hergestellt werden, mit Isocyanuratgruppen aufweisenden Polyisocyanaten mit vorwiegend cycloaliphatisch gebundenen Isocyanatgruppen. Die aus den genannten Komponenten erhaltenen Lacke besitzen aufgrund der Verwendung der speziellen Polyisocyanate eine sehr geringe Inhalationstoxizität und ergeben für die Automobilreparaturdecklackierung gut geeignete bei niedrigen Temperaturen härtende, nicht vergilbende, säurebeständige Überzüge gleichzeitig hoher Elastizität, Kratzfestigkeit, Endhärte und Witterungsstabilität. Die Härtungsgeschwindigkeit dieser Lackfilme bei Raumtemperatur sowie ihre Superbenzinbeständigkeit genügen zwar den Anforderungen der Praxis, erreichen aber teilweise nicht ganz den Standard der günstigsten Bindemittelsysteme des Standes der Technik etwa auf Basis von hydroxylgruppenhaltigen Polyacrylatharzen und Biuretgruppen aufweisenden aliphatischen Polyisoxyanaten.

Im Gegensatz zu den bisher vorzugsweise in Automobilreparaturdecklacken eingesetzten biuretisierten aliphatischen Polyisocyanaten zeigen isocyanuratgruppenhaltige Polyisocyanate mit vorwiegend cycloaliphatisch gebundenen Isocyanatgruppen, vorzugsweise durch Trimerisierung von 3-Isocyanatomethyl-3,5,5-trimethyl-cyclohexylisocyanat (= Isophorondiisocyanat) gemäss der GB-PS 1 391 066, DE-OS 2 325 826 und 2 732 662 hergestellte Produkte, auch in Form von Aerosolen, nur eine äusserst geringe Inhalationstoxizität, was für die Verwendung bei der Automobilreparaturlackierung von grossem Vorteil ist.

Auch Kombinationen aus cycloaliphatischen isocyanuratgruppenhaltigen Polyisocyanaten und biuret- und/oder isocyanuratgruppenhaltigen Polyisocyanaten mit aliphatisch gebundenen Isocyanatgruppen in untergeordneten Mengen, vorzugsweise auf Basis von Hexamethylendiisocyanat, ergeben immer noch gewerbehygienisch wesentlich günstigere Eigenschaften als etwa reine biuretisierte aliphatische Polyisocyanate. Das gleiche gilt etwa auch für die in der DE-OS 3 033 860 beschriebenen Polyisocyanate, die durch Trimerisierung von Mischungen und 3-Isocyanatomethyl-3,5,5-trimethyl-cyclohexylisocyanat und Hexamethylendiisocyanat in untergeordneten Mengen hergestellt werden. Die genannten Polyisocyanate ergeben alle in Kombination mit geeigneten Polyolen Lackfilme hoher Witterungsstabilität und Vergilbungsresistenz.

Werden die dem Stand der Technik entsprechenden hydroxylgruppenhaltigen Polyacrylatharze, wie sie etwa in den oben genannten Anmeldungen DE-AS 1 669 008, DE-AS 1 668 510, DE-OS 2 460 329, DE-AS 2 054 239, 2 603 259, 2 626 900, 2 659 853 und DE-OS 2 851 613 beschrieben sind, d.h. auf Basis von Hydroxyalkylacrylaten und/oder -methacrylaten mit 2 bis 3 C-Atomen in der Hauptkette des Alkoholrestes, gegebenenfalls kombiniert mit Addukten von Glycidylestern einer verzweigten aliphatischen Monocarbonsäure an Acrylsäure und/oder Methacrylsäure, mit diesen Isocyanuratgruppen gegebenenfalls aber auch Biuretgruppen enthaltenden Polyisocyanaten mit vorwiegend cycloaliphatisch gebundenen Isocyanatgruppen kombiniert, so erhält man hieraus bei allen für Automobilreparaturlackierungen üblichen Härtungstemperaturen zwischen Raumtemperatur und 80°C Lackfilme mit unzureichenden mechanischen Eigenschaften und teilweise nicht ausreichender Superbenzinfestigkeit innerhalb praxisüblicher Härtungsdauern. Bei Verwendung von Acrylatharzen mit hohen Hydroxylzahlen (> 100) und vorwiegend aus Monomeren, die Homopolymerisate hoher Glasübergangstemperatur (> 20°C) ergeben, erhält man bei praxisüblichen Härtungsbedingungen (etwa 7 Tage/Raumtemperatur oder maximal 30 bis 60 Minuten/80°C) zwar Lackfilme ausreichender Kratzfestigkeit und in einigen Fällen genügender Benzinfestigkeit, die andererseits aber viel zu spröde sind, d.h. also den Praxisanforderungen nicht genügen. Der Einsatz von Acrylatharzen niedrigerer Hydroxylzahlen (< 100) mit hohen Anteilen an Monomerbausteinen, die Homopolymerisate niedriger Glasübergangstemperatur (< 5°C) ergeben, führt entsprechend zu Lackfilmen zwar ausreichender Flexibilität, aber für die Praxis zu geringer Kratzfestigkeit und Superbenzinfestigkeit. Verwendung grösserer Katalysatormengen ergibt zwar zum Teil Filme sowohl verbesserter Flexibilität als auch Kratzfestigkeit, die aber noch nicht genügend rasch benzinfest aushärten. Darüberhinaus zeigen die entsprechenden Lackmischungen zu kurze Topfzeiten.

Zweikomponentenlacke aus den in der DE-OS 1 720 265 beschriebenen Polyhydroxypolyacrylatharzen und isocyanurat-, gegebenenfalls biurethaltigen Polyisocyanaten mit vorwiegend cycloaliphatisch gebundenen Isocyanatgruppen führen ähnlich wie die obengenannten Kombinationen zu Filmen nicht ausreichender Elastizität. Bei Kombination der in der DE-OS 2 836 612 beschriebenen Polyhydroxypolyacrylate, die zwingend Nitrilseitengruppen enthalten, mit Isocyanurat-, gegebenenfalls Biuretgruppen und vorwiegend cycloaliphatisch gebundene Isocyanatgruppen aufweisenden Polyisocyanaten erhält man, wie oben erwähnt, für Automobilreparaturdecklacke nicht brauchbare Lackschichten zu starker Vergilbungstendenz und nicht ausreichender Witterungsstabilität. Die in der DE-OS 2 900 592 beanspruchten, gleichzeitig zwingend Hydroxyl- und tertiäre Aminogruppen aufweisenden Acrylatharze zeigen in Kombination mit diesen Polyisocyanaten, wie oben erwähnt, vor allem Probleme bezüglich ausreichender Säurestabilität der Lackfilme.

Die den DE-Osen 3 010 719 und 3 027 776 zu entnehmenden Kombinationen aus Polyesterpolyolen, hydroxylgruppenhaltigen Acrylatharzen bzw. mit ε-Caprolacton modifizierten hydroxylgruppenhaltigen Poly(meth)acrylaten einerseits und vorwiegend cycloaliphatischen Polyisocyanaten andererseits sind, wie oben erwähnt, für den Einsatz in Automobilreparaturdecklacken vor allem aufgrund der erforderlichen relativ hohen Einbrenntemperaturen und der langsamen Antrocknung wenig geeignet.

Die in der DE-OS 3 137 133 beschriebenen Bindemittel aus speziellen hydroxylgruppenhaltigen Polyacrylaten und Isocyanuratgruppen aufweisenden Polyisocyanaten mit vorwiegend cycloaliphatisch gebundenen Isocyanatgruppen sind an sich gut geeignet für die Verwendung auf dem Automobilreparatursektor. Allerdings wäre eine

etwas höhere Härtungsgeschwindigkeit der Lackfilme bei Raumtemperatur und gleichzeitig eine verbesserte Superbenzinbeständigkeit wünschenswert.

Aufgabe der vorliegenden Erfindung war es daher, ein neues Verfahren zur Herstellung von Überzügen zur Verfügung zu stellen, bei welchem Bindemittel auf Basis isocyanurat-, gegebenenfalls biuretgruppenhaltiger Polyisocyanate einer Funktionalität zwischen 2,5 und 6, bevorzugt 3 und 5, mit vorwiegend cycloaliphatisch gebundenen Isocyanatgruppen und Hydroxylgruppen aufweisender Polyacrylatharze in organischer Lösung zum Einsatz kommen, welche nicht die genannten technischen Nachteile besitzen. Dies bedeutet, dass mit Hilfe des erfindungsgemässen Verfahrens, ausgehend von Lackmischungen genügend langer Topfzeit, bei niedrigen Temperaturen ohne Katalysatorzugabe sehr schnell superbenzinfest härtende, nicht vergilbende Filme gleichzeitig hoher Flexibilität, Kratzfestigkeit und Witterungsstabilität bzw. Kreidungsbeständigkeit erhalten werden.

Unter Funktionalität im Sinne der vorliegenden Erfindung wird die durchschnittliche Zahl der reaktionsfähigen, gegebenenfalls verkappten Isocyanatgruppen pro Polyisocyanatmolekül verstanden.

Überraschenderweise liess sich die Aufgabe der Erfindung dadurch lösen, dass Überzüge auf Basis von gegebenenfalls teilweise oder vollständig Biuretgruppen enthaltenden Polyisocyanaten einer Funktionalität zwischen 2,5 und 6, bevorzugt 3 bis 5, mit vorwiegend cycloaliphatisch gebundenen Isocyanatgruppen durch Umsetzung mit hydroxylgruppenhaltigen Polyacrylaten spezieller Zusammensetzung hergestellt werden.

Gegenstand der vorliegenden Erfindung ist ein Verfahren zur Herstellung von Überzügen auf der Basis von Umsetzungsprodukten von

(A) Polyhydroxylpolyacrylatharzen aus Estern der Acrylsäure und/oder Methacrylsäure mit monofunktionellen aliphatischen Alkoholen, Monoestern der Acrylsäure und/oder Methacrylsäure mit polyfunktionellen aliphatischen Alkoholen und anderen copolymerisierbaren olefinisch ungesättigten Monomeren mit

(B) gegebenenfalls teilweise oder vollständig mit CH-, NH- oder OH-aciden Blockierungsmitteln verkappten, Isocyanurat- und gegenenfalls Biuretgruppen aufweisenden Polyisocyanaten einer Funktionalität zwischen 2,5 und 6,

das dadurch gekennzeichnet ist, dass man als Polyhydroxypolyacrylatharze (A) hydroxylgruppenhaltige Copolymerisate aus

a) 6 bis 70 Gew.% mindestens eines Esters der allgemeinen Formel

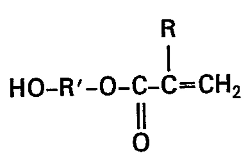

wobei

R für Wasserstoff oder eine Methylgruppe,

R′ für einen gerad- oder verzweigtkettigen Alkylenrest mit 2 bis 18 C-Atomen oder einen bis zu drei cycloaliphatische Gruppen enthaltenden Alkylenrest mit 7 bis 17 C-Atomen stehen, und die Gruppierung HO-R′- gegebenenfalls teilweise oder vollständig durch die Gruppierung Z-O-R′- ersetzt sein kann, worin Z für einen Rest der allgemeinen Formel

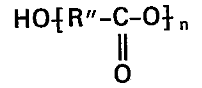

steht, worin n für eine ganzen Zahl von 1 bis 3 steht und R″ eine 4 bis 8 Kohlenstoffatome enthaltende Alkylenkette bedeutet, welche gegebenenfalls zusätzlich 1 bis 3 Alkylsubstituenten mit insgesamt nicht mehr als 10 Kohlenstoffatomen und/oder einen cycloaliphatischen Rest mit 6 bis 10 Kohlenstoffatomen und/oder einen, gegebenenfalls alkylsubstituierten, aromatischen Rest mit 6 bis 8 Kohlenstoffatomen und/oder einen araliphatischen Rest mit 7 bis 9 Kohlenstoffatomen und/oder einen 1 bis 8 Kohlenstoffatome enthaltenden Alkoxyrest aufweist,

b) 0 bis 50 Gew.% eines oder mehrerer Hydroxyalkylester der Acrylsäure und/oder Methacrylsäure der allgemeinen Formel

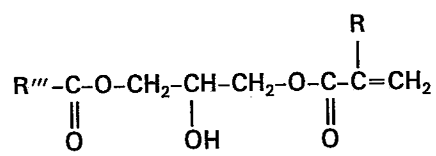

wobei

R für Wasserstoff oder eine Methylgruppe,

R‴ für den Alkylrest einer verzweigten aliphatischen Carbonsäure mit 4 bis 26 C-Atomen stehen,

c) 10 bis 50 Gew.% mindestens eines Alkylesters der Acrylsäure und/oder Methacrylsäure, der Homopolymerisate mit Glasübergangstemperaturen von +5°C bis +120°C bildet,

d) 0 bis 10 Gew.% eines Vinylaromaten,

e) 10 bis 60 Gew.% mindestens eines Alkylesters und/oder bis zu 2 Ethersauerstoffbrücken enthaltenden Alkylglykolesters der Acrylsäure und/oder Methacrylsäure, der Homopolymerisate mit Glasübergangstemperaturen von −80°C bis +4,5°C bildet,

f) 0 bis 10 Gew.% eines Amides der Acrylsäure und/oder Methacrylsäure, das gegebenenfalls am Amidstickstoff einen oder zwei Alkylreste mit 1 bis 8 Kohlenstoffatomen, die gegebenenfalls eine Carbonylgruppe enthalten können, oder einen oder zwei Phenylreste als Substituenten trägt,

g) 1 bis 25 Gew.% mindestens einer polymerisierbaren, olefinisch ungesättigten, heterocyclischen Verbindung der allgemeinen Formeln (I) bis (VIII)

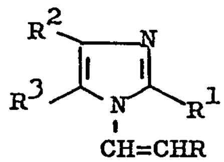

(I),

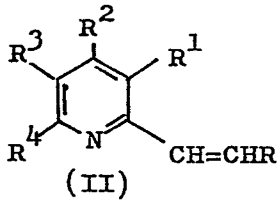

(II)

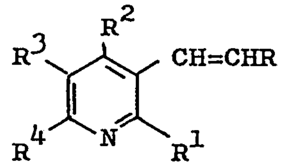

(III)

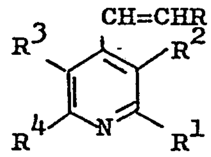

(IV)

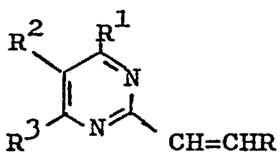

(V)

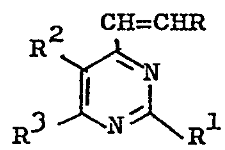

(VI)

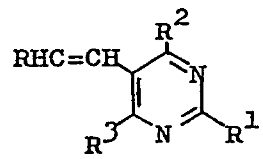

(VII)

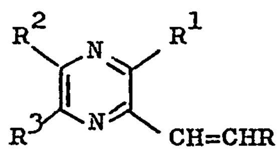

(VIII)

wobei
R für Wasserstoff oder eine Methylgruppe steht,
$R^1$, $R^2$, $R^3$ und $R^4$ untereinander gleich oder verschieden sind und jeweils für Wasserstoff, eine Methyl- oder Ethylgruppe, einen gerad- oder verzweigtkettigen Alkylrest mit 3 bis 4 C-Atomen, einen gegebenenfalls durch eine Alkylgruppe mit 1 bis 4 C-Atomen, durch Halogen oder eine Nitrogruppe substituierten Phenylrest, eine Gruppe der allgemeinen Formel $-R^{I}-A-R^{II}$
worin
A Sauerstoff oder Schwefel,
$R^{I}$ eine Methylen-, Ethylen- oder gegebenenfalls durch eine Alkylgruppe mit 1 bis 4 C-Atomen, durch Halogen oder eine Nitrogruppe substituierte Phenylengruppe und
$R^{II}$ eine Methyl-, Ethyl- oder gegebenenfalls durch eine Alkylgruppe mit 1 bis 4 C-Atomen, durch Halogen oder eine Nitrogruppe substituierte Phenylgruppe bedeuten,
eine Halogen- oder Nitrogruppe, sowie eine Gruppe der allgemeinen Formeln $-OR^{III}$, $-COOR^{III}$, $-SO_2R^{III}$, $-CONR^{III}R^{-IV}$ oder $-SO_2NR^{III}R^{IV}$,
worin
$R^{III}$ und $R^{IV}$ untereinander gleich oder verschieden sind und jeweils eine Methyl- oder Ethylgruppe, einen gerad- oder verzweigtkettigen Alkylrest mit 3 bis 4 C-Atomen oder einen gegebenenfalls durch eine Alkylgruppe mit 1 bis 4 C-Atomen, durch Halogen oder eine Nitrogruppe substituierten Phenylrest bedeuten, stehen
und ausserdem in den Formeln (I), (II), (III), (V), (VI) und (VIII) $R^2$ und $R^3$ oder in der Formel (III) $R^3$ und $R^4$, in den Formeln (II) und (IV) $R^3$ und $R^4$ oder $R^1$ und $R^2$, sowie in den Formeln (II) und (IV) sowohl $R^3$ und $R^4$ als auch $R^1$ und $R^2$ gemeinsam mit dem Heterocyclus einen anellierten, gegebenenfalls durch eine Alkylgruppe mit 1 bis 4 C-Atomen, durch Halogen oder eine Nitrogruppe substituierten aromatischen Sechsring bilden können,
h) 0 bis 20 Gew.% unter (a) bis (g) nicht genannter Monomerer, deren einpolymerisierte Reste gegenüber Isocyanatgruppen inert sind,
mit der Massgabe, dass die Summe der unter (a) und (b) genannten Prozentzahlen 6 bis 70, die Summe der unte (c), (d) und (g) genannten Prozentzahlen 11 bis 60 und die Summe der Prozentzahlen der unter (a) bis (h) genannten Komponenten 100 beträgt,
und als Isocyanurat- und gegebenenfalls Biuretgruppen aufweisende Polyisocyanate (B) einer Funktionalität zwischen 2,5 und 6 ein Gemisch aus
(B1) 60 bis 99 Gew.% solcher Polyisocyanate, die Isocyanuratgruppen und vorwiegend cycloaliphatisch gebundene Isocyanatgruppen aufweisen und (B2) 1 bis 40 Gew.% Biuretgruppen und/oder Isocyanuratgruppen enthaltender Polyisocyanate mit vorwiegend aliphatisch gebundenen Isocyanatgruppen, wobei die Summe der unter (B1) und (B2) genannten Prozentzahlen 100 beträgt und/oder ein isocyanuratgruppenhaltiges Polyisocyanat, welches
1) 60 bis 99 Gew.% eines Diisocyanates mit mindestens einer cycloaliphatisch gebundenen Isocyanatgruppe und
2) 1 bis 40 Gew.% eines aliphatischen Diisocyanates,
eingebaut enthält, wobei die Summe der unter 1) und 2) genannten Prozentzahlen 100 ergibt, verwendet.

Gegenstand der vorliegenden Erfindung sind ausserdem Metallteile, die nach dem erfindungsgemässen Verfahren mit einem Überzug versehen sind.

Zu den für das erfindungsgemässe Verfahren zu verwendenden Umsetzungsprodukten und deren Aufbaukomponenten ist im einzelnen folgendes auszuführen:

(A) Als Polyhydroxypolyacrylatharze (A) verwendet man hydroxylgruppenhaltige Copolymerisate aus:

a) 6 bis 70 Gew.% mindestens eines Esters der allgemeinen Formel

$$HO-R'-O-\underset{\underset{O}{\|}}{C}-\overset{\overset{R}{|}}{C}=CH_2$$

wobei

R für Wasserstoff oder eine Methylgruppe,

R′ für einen gerad- oder verzweigtkettigen Alkylenrest mit 2 bis 18 C-Atomen oder einen bis zu drei cycloaliphatische Gruppen enthaltenden Alkylenrest mit 7 bis 17 C-Atomen stehen, und die Gruppierung HO-R′- gegebenenfalls teilweise oder vollständig durch die Gruppierung Z-O-R′- ersetzt sein kann, worin Z für einen Rest der allgemeinen Formel

$$HO\{R''-\underset{\underset{O}{\|}}{C}-O\}_n$$

steht, worin n für eine ganze Zahl von 1 bis 3 steht und R″ eine 4 bis 8 Kohlenstoffatome enthaltende Alkylenkette bedeutet, welche gegebenenfalls zusätzlich 1 bis 3 Alkylsubstituenten mit insgesamt nicht mehr als 10 Kohlenstoffatomen und/oder einen cycloaliphatischen Rest mit 6 bis 10 Kohlenstoffatomen und/oder einen, gegebenenfalls alkylsubstituierten, aromatischen Rest mit 6 bis 8 Kohlenstoffatomen und/oder einen araliphatischen Rest mit 7 bis 9 Kohlenstoffatomen und/oder einen 1 bis 8 Kohlenstoffatome enthaltenden Alkoxyrest aufweist,

b) 0 bis 50 Gew.% eines oder mehrerer Hydroxyalkylester der Acrylsäure und/oder Methacrylsäure der allgemeinen Formel

$$R'''-\underset{\underset{O}{\|}}{C}-O-CH_2-\underset{\underset{OH}{|}}{CH}-CH_2-O-\underset{\underset{O}{\|}}{C}-\overset{\overset{R}{|}}{C}=CH_2$$

wobei

R für Wasserstoff oder eine Methylgruppe,

R‴ für den Alkylrest einer verzweigten aliphatischen Carbonsäure mit 4 bis 26 C-Atomen stehen

c) 10 bis 50 Gew.% mindestens eines Alkylesters der Acrylsäure und/oder Methacrylsäure, der Homopolymerisate mit Glasübergangstemperaturen von +5°C bis +120°C bildet,

d) 0 bis 10 Gew.% eines Vinylaromaten,

e) 10 bis 60 Gew.% mindestens eines Alkylesters und/oder bis zu 2 Ethersauerstoffbrücken enthaltenden Alkylglykolesters der Acrylsäure und/oder Methacrylsäure, der Homopolymerisate mit Glasübergangstemperaturen von −80°C bis +4,5°C bildet,

f) 0 bis 10 Gew.% eines Amides der Acrylsäure und/oder Methacrylsäure, das gegebenenfalls am Amidstickstoff einen oder zwei Alkylreste mit 1 bis 8 Kohlenstoffatomen, die gegebenenfalls eine Carbonylgruppe enthalten können, oder einen oder zwei Phenylreste als Substituenten trägt,

g) 1 bis 25 Gew.% mindestens einer polymerisierbaren, olefinisch ungesättigten, heterocyclischen Verbindung der allgemeinen Formel (I) bis (VIII)

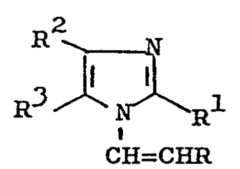
(I),

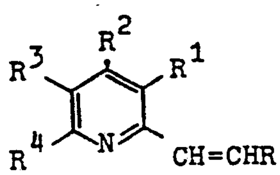
(II)

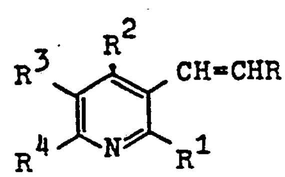
(III)

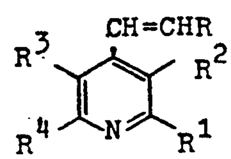
(IV)

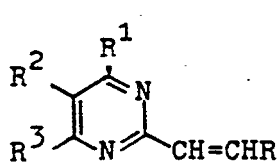
(V)

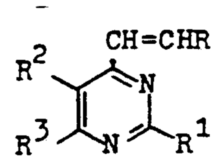
(VI)

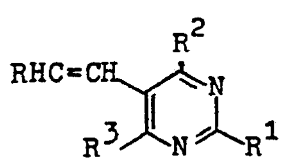
(VII)

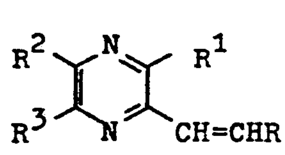
(VIII)

wobei

R für Wasserstoff oder eine Methylgruppe steht,

$R^1$, $R^2$, $R^3$ und $R^4$ untereinander gleich oder verschieden sind und jeweils für Wasserstoff, eine Methyl- oder Ethylgruppe, einen gerad- oder verzweigtkettigen Alkylrest mit 3 bis 4 C-Atomen,

einen gegebenenfalls durch eine Alkylgruppe mit 1 bis 4 C-Atomen, durch Halogen oder eine Nitrogruppe substituierten Phenylrest, eine Gruppe der allgemeinen Formel $-R^I-A-R^{II}$
worin
A Sauerstoff oder Schwefel,
$R^I$ eine Methylen-, Ethylen- oder gegebenenfalls durch eine Alkylgruppe mit 1 bis 4 C-Atomen, durch Halogen oder eine Nitrogruppe substituierte Phenylgruppe und
$R^{II}$ eine Methyl-, Ethyl- oder gegebenenfalls durch eine Alkylgruppe mit 1 bis 4 C-Atomen, durch Halogen oder eine Nitrogruppe substituierte Phenylgruppe bedeuten,
eine Halogen- oder Nitrogruppe, sowie eine Gruppe der allgemeinen Formeln $-OR^{III}$, $-COOR^{III}$, $-SO_2R^{III}$, $-CONR^{III}R^{IV}$ oder $-SO_2NR^{III}R^{IV}$, worin
$R^{III}$ und $R^{IV}$ untereinander gleich oder verschieden sind und jeweils eine Methyl- oder Ethylgruppe, einen gerad- oder verzweigtkettigen Alkylrest mit 3 bis 4 C-Atomen oder einen gegebenenfalls durch eine Alkylgruppe mit 1 bis 4 C-Atomen, durch Halogen oder eine Nitrogruppe substituierten Phenylrest bedeuten, stehen
und ausserdem in den Formeln (I), (II), (III), (V), (VI) und (VIII) $R^2$ und $R^3$ oder in der Formel (III) $R^3$ und $R^4$, in den Formeln (II) und (IV) $R^3$ und $R^4$ oder $R^1$ und $R^2$, sowie in den Formeln (II) und (IV) sowohl $R^3$ und $R^4$ als auch $R^1$ und $R^2$ gemeinsam mit dem Heterocyclus einen anellierten, gegebenenfalls durch eine Alkylgruppe mit 1 bis 4 C-Atomen, durch Halogen oder eine Nitrogruppe substituierten aromatischen Sechsring bilden können,
h) 0 bis 20 Gew.% unter (a) bis (g) nicht genannter Monomerer, deren einpolymerisierte Reste gegenüber Isocyanatgruppen inert sind, mit der Massgabe, dass die Summe der unter (a) und (b) genannten Prozentzahlen 6 bis 70, die Summe der unter (c), (d) und (g) genannten Prozentzahlen 11 bis 60 und die Summe der Prozentzahlen der unter (a) bis (h) genannten Komponenten 100 beträgt.

(a) Als Ester der allgemeinen Formel

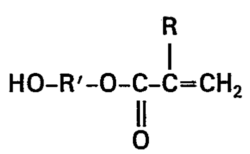

worin die Symbole R und R′ die vorstehend angegebene Bedeutung haben, eignen sich beispielsweise Monoester zweiwertiger Alkohole, wie Decandiol-1,10, Octandiol-1,8, Pentandiol-1,5, 1,4-Dihydroxymethylcyclohexan, 3(4),8(9)-Dihydroxymethyltricyclo[5.2.1.0$^{2.6}$]-decan, 2,2-Dimethylpropandiol-1,3, Butandiol-1,4, Hexandiol-1,6, Propandiol-1,2 oder Ethandiol-1,2 mit Acrylsäure oder Methacrylsäure z.B. Decandiol-1,10-monoacrylat, Decandiol-1,10-monomethacrylat, Octandiol-1,8-monoacrlat, Octandiol-1,8, monomethacrylat, Pentandiol-1,5-monoacrylat, Pentandiol-1,5-monomethacrylat, 1,4-Dihydroxymethylcyclohexanmonoacrylat, 1,4-Dihydroxymethylcyclohexanmonomethacrylat, 3(4),8(9)-Dihydroxymethyltricyclo[5.2.1.0$^{2.6}$]decanmonoacrylat und -monomethacrylat, 2,2-Dimethylpropandiol-1,3-monoacrylat und -monomethacrylat, Butandiol-1,4-monomethacrylat, Hexandiol-1,6-monomethacrylat, 2-Hydroxypropylacrylat, 2-Hydroxypropylmethacrylat, sowie vorzugsweise Hydroxyethylacrylat, Hydroxyethylmethacrylat, Butandiol-1,4-monoacrylat oder -monomethacrylat und Hexandiol-1,6-monoacrylat oder -monomethacrylat.

Ausserdem können Produkte verwendet werden, welche durch Umsetzung der oben genannten Hydroxylgruppen aufweisenden Acrylsäure- bzw. Methacrylsäureester mit gegebenenfalls substituierten Lactonen mit 4 bis 8 C-Atomen im Ring im Molverhältnis 1,5:1 bis 1:3 zu erhalten sind. Als hierfür einzusetzende Lactone sind etwa zu nennen:

δ-Valerolacton, γ,γ-Dimethylvalerolacton, ε-Caprolacton, α-, β-, γ-, δ-, ε-Methyl-ε-caprolacton, die entsprechenden Monoethyl-, -propyl-, -isopropyl- und -oxtyl-ε-caprolactone, β, δ-Dimethyl-, γ, γ-Dimethyl-, β, δ, δ-Trimethyl-, β-Methyl-δ-Ethyl-, γ-Cyclohexyl- und γ-Phenyl-ε-caprolacton, ζ-Önantholacton sowie η-Caprylolacton, wobei ε-Caprolacton besonders bevorzugt ist.

Bevorzugte Lactonaddukte sind die Reaktionsprodukte von Hydroxyethylacrylat und/oder -methacrylat und/oder 2-Hydroxypropylacrylat und/oder -methacrylat und/oder Butandiol-1,4- und/oder Hexandiol-1,6-monoacrylat und/oder -monomethacrylat mit ε-Caprolacton im Molverhältnis von 1,5:1 bis 1:3, wobei die Addukte auf Basis von Hydroxyethylacrylat und/oder -methacrylat, 2-Hydroxypropylacrylat und/oder -methacrylat sowie Butandiol-1,4-monoacrylat und/oder -monomethacrylat besonders bevorzugt sind. Selbstverständlich können als hydroxylgruppenhaltige Acrylate bzw. Methacrylate auch Gemische der genannten Lactonaddukte mit den oben angegebenen Hydroxyalkylacrylaten bzw. - -methacrylaten in jedem beliebigen Mischungsverhältnis zwischen 1:95 und 99:1 eingesetzt werden. Die Herstellung der ungesättigten Lactonaddukte erfolgt nach einem an sich bekannten Verfahren, wie es in der DE-OS 3 027 776 beschrieben ist, etwa durch Umsetzung von hydroxylgruppenhaltigen Acrylsäure- bzw. Methacrylsäureestern mit ε-Caprolacton im Äquivalentverhältnis von 1,5:1 bis 1:3 bei Temperaturen zwischen 60 und 130°C in Anwesenheit von 0,01 bis 0,15 Gew.% Organozinn-Katalysatoren, wie z.B. Dibutylzinnoxid oder Dubutylzinndiacetat unter Durchleiten von Luft.

Komponente (a) ist im erfindungsgemäss zu verwendenden Copolymerisat (A) in einer Menge von 6 bis 70, vorzugsweise 6 bis 50 Gew.% einpolymerisiert.

(b) Als Hydroxyalkylester der Acrylsäure und/oder Methacrylsäure der allgemeinen Formel

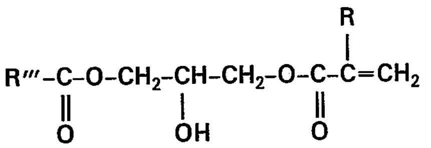

wobei R für Wasserstoff oder eine Methylgruppe und R''' für den Alkylrest einer verzweigten Carbonsäure mit 4 bis 26 C-Atomen stehen, eignen sich z.B. Trimethylessigsäureglycidylester (meth)-acrylat, Versaticsäureglycidylesteracrylat und -methacrylat. Desgleichen eignen sich Gemische der genannten Hydroxyalkylmethacrylate und -acrylate.

Komponente (b) kann in einer Menge von 0 bis 50, vorzugsweise 0 bis 25 Gew.% im Polyhydroxypolyacrylatharz (A) einpolymerisiert sein. Die Summe der unter (a) und (b) genannten Prozentzahlen beträgt 6 bis 70, vorzugsweise 6 bis 50 Gew.%.

(c) Als Alkylester der Acrylsäure und/oder Methacrylsäure, die Homopolymerisate mit Glasübergangstemperaturen von +5°C, bis +120°C bilden, kommen z.B. in Frage Methylacrylat, Methylmethacrylat, Ethylmethacrylat, tert.-Butylacrylat, n-Butylmethacrylat und i-Butylmethacrylat oder deren Mischungen, wobei Methylmethacrylat und tert.-Butylacrylat bevorzugt sind.

Komponente (c) ist im erfindungsgemäss zu verwendenden Copolymerisat (A) in einer Menge von 10 bis 50, vorzugsweise 25 bis 50 Gew.% einpolymerisiert.

(d) Als Vinylaromaten kommen beispielsweise Styrol, α-Methylstyrol, o- und p-Chlorstyrol, o-, m-, p-Methylstyrol und p-tert.-Butylstyrol oder deren Gemische in Betracht, wobei Styrol bevorzugt ist.

Die Vinylaromaten (d) können im Polyhydroxypolyacrylatharz (A) in Mengen von 0 bis 10, vorzugsweise 0 bis 7 Gew.% einpolymerisiert sein.

Die Summe der unter (c) und (d) genannten Prozentzahlen beträgt im allgemeinen 10 bis 50, vorzugsweise 25 bis 50 Gew.%.

(e) Als Alkylester und/oder bis zu 2 Ethersauerstoffbrücken enthaltende Alkylglykolester der Acrylsäure und/oder Methacrylsäure, die Homopolymerisate mit Glasübergangstemperaturen von −80 bis +4,5°C bilden, sind beispielsweise Ethylacrylat, n-Butylacrylat, i-Butylacrylat, 2-Ethylhexylacrylat, 2-Ethylhexylmethacrylat, Ethylglykolacrylat, Ethylglykolmethacrylat, Ethyldiglykolacrylat, Ethyldiglykolmethacrylat, Laurylacrylat und Laurylmethacrylat, oder deren Mischungen geeignet, wobei n-Butylacrylat und i-Butylacrylat bevorzugt sind.

Komponente (e) ist im erfindungsgemäss zu verwendenden Copolymerisat (A) in einer Menge von 10 bis 60, vorzugsweise 20 bis 50 Gew.% einpolymerisiert.

(f) Als Amide der Acrylsäure und/oder Methacrylsäure, die am Amidstickstoff gegebenenfalls einen oder zwei Alkylreste mit 1 bis 8 Kohlenstoffatomen, welche gegebenenfalls eine Carbonylgruppe enthalten können, oder einen oder zwei Phenylreste als Substituenten tragen, kommen beispielsweise Acrylamid, Methacrylamid, N-Methylacrylamid, N-Methylmethacrylamid, N-Ethylacrylamid, N-Isopropylacrylamid, N-N-Dimethylacrylamid, N,N-Diethylacrylamid, N,N-Diisopropylacrylamid, N-Phenylacrylamid, N,N-Di-n-butylacrylamid und N-(1,1-dimethyl-3-oxo-butyl)-acrylamid (= Diacetonacrylamid), vorzugsweise Acrylamid und Methacrylamid, in Betracht.

Komponente (f) kann im Polyhydroxypolyacrylatharz (A) in einer Menge von 0 bis 10, vorzugsweise 0 bis 5 Gew.% einpolymerisiert sein.

(g) Als polymerisierbare, olefinisch ungesättigte, heterocyclische Verbindungen der oben angegebenen allgemeinen Formeln (I) bis (VIII), wobei R für Wasserstoff oder eine Methylgruppe steht, $R^1$, $R^2$, $R^3$ und $R^4$ untereinander gleich oder verschieden sind und jeweils für Wasserstoff, eine Methyl- oder Ethylgruppe, einen gerad- oder verzweigtkettigen Alkylrest mit 3 bis 4 C-Atomen, einen gegebenenfalls durch eine Alkylgruppe mit 1 bis 4 C-Atomen, Halogen, wie z.B. Chlor oder Brom, oder eine Nitrogruppe substituierten Phenylrest, eine Gruppe der allgemeinen Formel $-R^I-A-R^{II}$, worin A Sauerstoff oder Schwefel, $R^I$ eine Methyl-, Ethylen- oder gegebenenfalls durch eine Alkylgruppe mit 1 bis 4 C-Atomen, durch Halogen oder eine Nitrogruppe substituierte Phenylengruppe und $R^{II}$ eine Methyl, Ethyl- oder gegebenenfalls durch eine Alkylgruppe mit 1 bis 4 C-Atomen, durch Halogen- oder eine Nitrogruppe substituierte Phenylgruppe bedeuten, eine Halogen- oder Nitrogruppe, sowie eine Gruppe der allgemeinen Formeln $-OR^{III}$, $-COOR^{III}$, $-SO_2R^{III}$, $-CONR^{III}R^{IV}$ oder $SO_2NR^{III}R^{IV}$, worin $R^{III}$ und $R^{IV}$ untereinander gleich oder verschieden sind und jeweils eine Methyl- oder Ethylgruppe, einen gerad- oder verzweigtkettigen Alkylrest mit 3 bis 4 C-Atomen oder einen gegebenenfalls durch eine Alkylgruppe mit 1 bis 4 C-Atomen, durch Halogen oder eine Nitrogruppe substituierten Phenylrest bedeuten, stehen und ausserdem in den Formeln (I), (II), (III), (V), (VI) und (VIII) $R^2$ und $R^3$, oder in der Formel (III) $R^3$ und $R^4$, in den Formeln (II) und (IV) $R^3$ und $R^4$ oder $R^1$ und $R^2$, sowie in den Formeln (II) und (IV) sowohl $R^3$ und $R^4$ als auch $R^1$ und $R^2$ gemeinsam mit dem Heterocyclus einen anellierten, gegebenenfalls durch eine Alkylgruppe mit 1 bis 4 C-Atomen, Halogen, wie z.B. Chlor oder Brom, oder eine Nitrogruppe substituierten aromatischen Sechsring bilden können, kommen z.B. N-Vinylimidazole wie 1-Vinyl-2-methylimidazol, 1-Vinyl-2-phenylimidazol, 1-Cinylbenzimidazol, 1-Vinyl-2-ethylimidazol, 1-Propenyl-2-methylimidazol, 1-Vinyl-4-methylimidazol, 1-Vinyl-2-ethyl-4-methylimidazol, 1-Vinyl-4-nitroimidazol, 1-Vinylimidazol und 1-Propenylimidazol oder deren Mischungen in Betracht, wobei 1-Vinylimidazol, 1-Vinyl-2-methylimidazol und 1-Vinyl-2-phenylimidazol bevorzugt sind. Darüberhinaus sind als olefinisch ungesättigte heterocyclische Verbindungen (g) Vinylheterocyclen der Formeln (II) bis (VIII) beispielsweise 2-Vinylpyridin, 3-Vinylpyridin, 4-Vinylpyridin, 5-Ethyl-2-vinylpyridin, 6-Methyl-3-vinylpyridin, 2-Vinylchinolin, 2-Vinylisochinolin,

4-Vinylchinolin, 2-Vinylchinoxalin, 4-Vinylchinazolin, 2- Vinylpyrimidin 4-Vinylpyrimidin und 2-Vinylpyridazin oder deren Gemische geeignet, wobei 3-Vinylpyridin und 4-Vinylpyridin bevorzugt sind.

Komponente (g) ist im erfindungsgemäss zu verwendenden Copolymerisat (A) in einer Menge von 1 bis 25, vorzugsweise 2 bis 20 Gew.% einpolymerisiert.

(h) Als unter (a) bis (g) nicht genannte Monomere, deren einpolymerisierte Reste gegenüber Isocyanatgruppen inert sind, die also unter den beim erfindungsgemässen Verfahren in Frage kommenden Umsetzungsbedingungen nicht mit Isocyanat- oder verkappten Isocyanatgruppierungen reagieren, seien beispielsweise genannt Vinylester mit 1 bis 12 Kohlenstoffatome enthaltenden Carbonsäuren, wie z.B. Vinylacetat, Vinylpropionat, Vinylpivalat, Vinyl-2-ethylhexanat, Vinyllaurat, Vinylbenzoat, Vinylhalogenide, wie z.B. Vinylchlorid, Vinylidenhalogenide, wie etwa Vinylidenchlorid, sowie N-Vinylpyrrolidon und N-Vinylcaprolactam und Gemische der genannten Monomeren.

Komponente (h) kann im Polyhydroxypolyacrylatharz in einer Menge von 0 bis 20, vorzugsweise 0 bis 10 Gew.% einpolymerisiert sein.

Die Summe der unte (a) bis (h) genannten Prozentzahlen beträgt 100.

Das hydroxylgruppenhaltige Copolymerisat (A) weist im allgemeinen Hydroxylzahlen zwischen 30 und 250, vorzugsweise 50 bis 150 auf.

Das Polyhydroxypolyacrylatharz (A) lässt sich aus den Monomeren (a) bis (h) nach üblichen Polymerisationsverfahren, beispielsweise durch kontinuierliche oder diskontinuierliche radikalinitiierte Polymerisation, vorzugsweise diskontinuierlich in organischer Lösung bei Temperaturen zwischen 80 und 160°C, z.B. in Gegenwart radikalliefernder Polymerisationsinitiatoren herstellen. Für das erfindungsgemässe Verfahren werden Polyhydroxypolyacrylatharze (A), die im allgemeinen mittlere Molekulargewichte im Zahlenmittel ($M_n$) zwischen 1000 und 20 000, bevorzugt zwischen 2000 und 10 000 bzw. K-Werte (nach Fikentscher) zwischen 12 und 40, vorzugsweise zwischen 15 und 30 aufweisen, zweckmässigerweise in organischen, gegenüber Isocyanatgruppen inerten Lösungsmitteln gelöst eingesetzt. Derartige geeignete Lösungsmittel sind z.B. Ester, wie n-Butylacetat, Ethylacetat und Isopropylacetat, Ether, wie z.B. Tetrahydrofuran, Dioxan und Diethylglykol, Etherester, wie z.B. Ethylglykolacetat, Methylglykolacetat und Butylglykolacetat, Kohlenwasserstoffe, insbesondere aromatische Kohlenwasserstoffe, wie Xylol oder Toluol, Ethylbenzol und Halogenkohlenwasserstoffe, wie Chlorbenzol, sowie Gemische dieser Lösungsmittel.

(B) Als erfindungsgemäss zu verwendende, gegebenenfalls teilweise oder vollständig mit CH-, NH- oder OH-aciden Blockierungsmitteln verkappte, Isocyanurat- und gegebenenfalls Biuretgruppen aufweisende Polyisocyanate einer Funktionalität zwischen 2,5 und 6, vorzugsweise zwischen 3 und 5, eignen sich solche mit vorwiegend cycloaliphatisch gebundenen Isocyanatgruppen. In Frage kommen hierfür beispielsweise Polyisocyanatgemische (B), die als Hauptkomponente (B1) bevorzugt ein isocyanuratgruppenhaltiges Trimerisat von 3-Isocyanatomethyl-3,5,-trimethylcyclohexylisocyanat (= Isophorondiisocyanat = IPDI) enthalten. Die Herstellung derartiger Isocyanuratgruppen enthaltender Polyisocyanate kann z.B. nach üblichen Methoden erfolgen, wie sie beispielsweise in den GB-PS 1 391 066, DE-OS 2 325 826 oder DE-OS 2 732 662 beschrieben sind, z.B. durch Trimerisierung des Diisocyanats bei Temperaturen zwischen ca. 40 und 120°C in Anwesenheit von Katalysatoren, wie etwa Metallverbindungen, z.B. Metallnaphthenaten, Erdalkaliacetaten, -formiaten und -carbonaten, Metallalkoxiden und Eisenacetylacetonat, bevorzugt sekundären und tertiären Aminen, wie Aziridinen in Kombination mit Trialkylaminen oder Triethylendiamin, kombiniert mit Propylenoxid.

Ebenfalls in Frage kommen Isocyanuratgruppen aufweisende Polyisocanate auf Basis von 1,4-Diisocyanatocyclohexan (= Cyclohexan-1,4-diisocyanat) und 4,4'-Diisocyanatodicyclohexylmethan (= Dicyclohexylmethan-4,4'-diisocyanat).

Als Isocyanatkomponente (B2) für das erfindungsgemässe Verfahren werden etwa biuretgruppenhaltige Isocyanataddukte mit vorwiegend aliphatisch gebundenen Isocyanatgruppen verwendet.

Als bevorzugt sei hier vor allem das seit langem bekannte und wie oben erwähnt, speziell in Zweikomponenten-Polyurethanlacken für den Automobilreparatursektor eingesetzte biuretisierte Hexamethylendiisocyanat genannt. Seine Herstellung kann, wie beispielsweise in den DE-PSen 1 101 394, 1 104 394, 1 174 759, 1 174 760, 1 227 004, 1 227 007, der GB-PS 1 044 932 und der DE-OS 1 931 055 beschrieben, etwa durch Einwirkung von freiem oder gebundenem Wasser (z.B. als Kristallwasser oder in Form von Ameisensäure), primären aliphatischen Monoaminen oder tertiären aliphatischen Monoalkoholen bei Temperaturen zwischen 80 und 200°C auf Hexamethylendiisocyanat und anschliessendes Entfernen des überschüssigen Diisocyanates mittels Vakuumdestillation im Dünnschichtverdampfer erfolgen. Als erfindungsgemäss einzusetzende Isocyanatkomponenten (B2) eignen sich ebenfalls isocyanuratgruppenhaltige Polyisocyanate mit vorwiegend aliphatisch gebundenen Isocyanatgruppen, wobei speziell das durch Trimerisierung von Hexamethylendiisocyanat erhaltene Isocyanataddukt bevorzugt ist. Diese Produkte können z.B. durch katalytische Timerisierung eines Teils der Isocyanatgruppen von organischen Diisocyanaten, wie beispielsweise in der DE-PS 1 201 992, den DE-OSen 1 644 809, 1 670 667, 2 325 826, 2 616 415, 2 616 416, 2 644 684, 2 724 914 und 2 806 731 beschrieben, hergestellt werden.

Das Isocyanatgemisch (B) setzt sich zusammen aus 60 bis 99 Gew.%, vorzugsweise 70 bis 99 Gew.% solcher Polyisocyanate (B1), die Isocyanuratgruppen und vorwiegend cycloaliphatisch gebundene Isocyanatgruppen aufweisen und 1 bis 40 Gew.%, bevorzugt 1 bis 30 Gew.% der letztgenannten Biuret- und/oder Isocyanuratgruppen enthaltenden Polyisocyanate (B2) mit vorwiegend aliphatisch gebundenen Isocyanatgruppen, wobei die Summe der unter (B1) und (B2) genannten Prozentzahlen 100 beträgt.

Anstelle der obengenannten Mischungen aus den Polyisocyanatkomponenten (B1) und (B2) sind für das erfindungsgemässe Verfahren ebenfalls isocyanuratgruppenhaltige Polyisocyanate (B) mit vorwiegend cycloaliphatisch gebundenen Isocyanatgruppen, welche sowohl cycloaliphatische als auch aliphatische Diisocyanate in eingebauter Form enthalten, verwendbar. Als cycloaliphatische Diisocyanate kommen etwa 1,4-Diisocyanatocyclohexan und als aliphatisches Diisocyanat vorzugsweise Hexamethylendiisocyanat in Frage. Diese gemischt cycloaliphatisch/aliphatischen Polyisocyanate können, wie in der DE-OS 3 033 860 beschrieben, durch Trimerisierung des Diisocyanatgemisches bei Temperaturen zwischen 40 und 100°C und bevorzugtem Einsatz geeigneter Hydroxylgruppen-substituierter quaternärer Ammoniumhydroxide hergestellt werden. Für das erfindungsgemässe Verfahren geeignete gemischte isocyanurathaltige Addukte enthalten beispielsweise 1) 60 bis 99 Gew.%, bevorzugt 70 bis 98 Gew.% cycloaliphatisches Diisocyanat, vorzugsweise Isophorondiisocyanat, 2) 1 bis 40 Gew.%, bevorzugt 2 bis 30 Gew.% aliphatisches Diisocyanat, vorzugsweise Hexamethylendiisocyanat, eingebaut, wobei die Summe der unter 1) und 2) angegebenen Prozentzahlen 100 beträgt.

Selbstverständlich sind für das erfindungsgemässe Verfahren sämtliche vorgenannte Polyisocyanat-Adukte in allen möglichen Kombinationen einsetzbar.

Der erfindungsgemässe Einsatz derartiger Polyisocyanatmischungen, die in untergeordneten Mengen biuretgruppenhaltige Addukte mit aliphatisch gebundenen Isocyanatgruppen – etwa auf Basis von Hexamethylendiisocyanat – bzw. Trimerisate aus cycloaliphatischen und in geringeren Mengen aliphatischen Diisocyanaten – etwa Isophorondiisocyanat und Hexamethylendiisocyanat umfassen, ergibt gegenüber dem Stand der Technik folgende Vorteile: einerseits resultieren, bedingt durch die Verwendung schon relativ niedriger Anteile an aliphatischen Isocyanataddukten Lackfilme hervorragender Elastizität und hoher Vernetzungsgeschwindigkeit, andererseits bleiben aber überraschenderweise die durch den Einsatz cycloaliphatischer Trimerisate implizierten Vorzüge, wie etwa ein hohes Härteniveau der Beschichtungen und ein vergleichsweise günstiges pot life sowie vor allem eine niedrige Inhalationstoxität der Lackmischungen weitgehend erhalten.

Als für die Lackpolyisocyanate (B) zu verwendende Blockierungsmittel kommen in Frage:

CH-, NH- oder OH-acide Blockierungsmittel wie z.B. Malonsäuredialkylester, Acetessigsäuredialkylester, Acetylaceton, ε-Caprolactam, Pyrrolidon, Phenole, p-Hydroxybenzoesäureester, Cyclohexanol, t-Butanol, bevorzugt Oxime wie Benzophenonoxim, Cyclohexanonoxim, Methylethylketoxim, Dimethylketoxim, besonders bevorzugt sind dabei monofunktionelle Ketoxime, insbesondere Methylethylketoxim und Dimethylketoxim.

Komponente (B) kann unverkappt, teilweise oder vollständig verkappt sein. Bevorzugt sind unverkappte Polyisocyanate.

Die Mengenverhältnisse der erfindungsgemäss zu verwendenden beiden Bindemittelkomponenten Polyisocyanat (B) und Polyhydroxypolyacrylat (A) werden zweckmässigerweise so gewählt, dass das Äquivalentverhältnis von – gegebenenfalls verkappten – Isocyanatgruppen zu reaktionsfähigen Hydroxylgruppen zwischen 0,25:1 und 4:1, vorzugsweise zwischen 0,5:1 und 2:1, liegt.

Die Herstellung von Überzügen nach dem erfindungsgemässen Verfahren erfolgt durch Vermischen der Komponenten (A) und (B), zweckmässigerweise gelöst in organischem Lösungsmittel oder Lösungsmittelgemisch, gegebenenfalls Zusatz von Pigmenten, wie üblichen Weiss- und Schwarzpigmenten, etwa Titandioxiden (Rutil), Zinksulfiden und Russ oder Buntpigmenten, z.B. Cadmiumsulfid, Eisenoxidgelb, Eisenoxidrot, Chromoxid, Benzidingelb, Phthalocyaninblau, Phthalocyaningrün, Thioindigo und Chinacridonen, z.B. in Mengen von bis zu 250%, bezogen auf Gesamtmenge Bindemittel (= Komponenten [A] und [B]), sowie anderer für die Verarbeitung von 2-Komponentenlacken üblichen Hilfs- und Zusatzstoffen und Auftragen auf das zu überziehende Substrat. Prinzipiell können auch Katalysatoren, wie z.B. Metallverbindungen, etwa Blei-, Zink- und Kobaltnaphthenate, Blei-, Zinn- und Calciumoctoat, Dibutylzinndiacetat, Dibutylzinndilaurat, Eisenacetylacetonat und Basen wie Triethylendiamin und Diethylethanolamin in Mengen von ca. 0,001 bis 10 Gew.% bezogen auf die Gesamtbindemittelmenge, verwendet werden, jedoch erfolgt die Herstellung der Überzüge vorzugsweise ohne Katalysatorzugabe, da es, wie bereits erwähnt, ein überraschender Vorteil der erfindungsgemässen Lackmischungen ist, dass sie ohne Beschleuniger sehr rasch zu harten, kratzfesten und superbenzinfesten Schichten aushärten und dabei dennoch praxisgerechte Topfzeiten ergeben.

Als Auftragsmethoden kommen die üblichen in Betracht, beispielsweise Spritzen, Tauchen, Streichen oder Walzen.

Nach dem erfindungsgemässen Verfahren lassen sich beispielsweise Metallteile aus Aluminium, Zink, Zinn, Eisen und Stahl, wie Stahlbleche, oder verzinkte Stahlbleche und Aluminiumbleche, darüberhinaus auch andere Substrate wie etwa Holz, Papier, Beton und Kunststoffe, z.B. PVC und Polyamid beschichten.

Die Härtung der Überzüge kann nach dem Auftragen auf das Substrat in üblicher Weise erfolgen, beispielsweise bei Raumtemperatur innerhalb von 24 Stunden bis 7 Tagen, oder zweckmässigerweise nach Ablüften bei Raumtemperatur, bei Temperaturen von etwa 60 bis 80°C innerhalb von 20 bis 60 Minuten.

Nach dem erfindungsgemässen Verfahren lassen sich Überzüge mit besonders vorteilhaften Eigenschaften erhalten. Die erfindungsgemäss erhaltenen Überzüge zeichnen sich insbesondere durch hohe Kratzfestigkeit, ausgezeichnete Superbenzinfestigkeit nach relativ kurzen Trocknungszeiten, gleichzeitig hohe Elastizität, guten Glanz und hervorragende Witterungsstabilität bei rascher Härtung und relativ langen Topfzeiten der zugrundeliegenden Lackmischungen aus.

Die in den Beispielen und Vergleichsbeispielen genannten Teile und Prozente sind, soweit nicht anders angegeben, Gewichtsteile und Gewichtsprozente.

Herstellung der Polyhydroxypolyacrylatharze

Die Herstellung der Polyhydroxypolyacrylatharze A bis G erfolgt gemäss dem Stand der Technik.

Polyacrylatharz A:

In einem mit Blattrührer, Rückflusskühler, Zulaufgefäss, Thermometer und Gaseinleitungsrohr versehenen Reaktionsgefäss werden 100 Teile n-Butylacetat/Xylol 1:1 auf 100°C erhitzt. Unter Einhalten dieser Temperatur und starkem Rühren wird eine Lösung von 77,5 Teilen Butandiol-1,4-monoacrylat, 42,5 Teilen Hydroxyethylacrylat, 75 Teilen Methylmethacrylat, 90 Teilen t-Butylacrylat, 190 Teilen n-Butylacrylat und 25 Teilen 1-Vinylimidazol sowie 10 Teilen Azodiisobuttersäurenitril in 130 Teilen n-Butylacetat/Xylol 1:1 mit konstanter Zulaufgeschwindigkeit unter Luftausschluss (im schwachen Stickstoffstrom) innerhalb eines Zeitraumes von 4 Stunden zugetropft. Anschliessend werden zur Nachpolymerisation noch 2,5 Teile Azodiisobuttersäurenitril in 75 Teilen n-Butylacetat/Xylol 1:1 im Verlauf von 2 Stunden gleichmässig zudosiert.

Das erhaltene Polyacrylatharz besitzt folgende Kennzahlen:

| | |
|---|---|
| Hydroxylzahl | = ca. 102 (bez. auf fest) |
| Viskosität bei 23°C | = 2750 mPa.s |
| K-Wert (3%ig im Dimethylformamid) | = 21,8 |

Polyacrylatharz B bis D und F bis G:

Die Herstellung der Copolymerisate wird, wie für Polyacrylatharz A beschrieben, durchgeführt. Die Zusammensetzung und Kennzahlen der Produkte sind in Tabelle 1 wiedergegeben.

Tabelle 1

| Polyacrylatharz | | B | C | D | F | G |
|---|---|---|---|---|---|---|
| Butandiol-1,4-monoacrylat | (Teile) | – | – | – | 38,5 | – |
| Hydroxyethylacrylat (HEA) | (Teile) | 103 | 103 | 103 | – | 31 |
| Addukt aus HEA und ε-Caprolacton*) | (Teile) | – | – | – | 143,5 | 143,5 |
| Methylmethacrylat | (Teile) | 100 | 50 | 50 | 75 | 100 |
| Styrol | (Teile) | – | 40 | 65 | – | – |
| t-Butylacrylat | (Teile) | 125 | 150 | 150 | 153 | 153 |
| n-Butylacrylat | (Teile) | 147 | 132 | 132 | 65 | 72,5 |
| l-Vinylimidazol | (Teile) | 25 | 25 | – | 25 | – |
| Hydroxylzahl | (mg KOH/g fest) | ca. 98 | ca. 100 | ca. 98 | ca. 100 | ca. 100 |
| Viskosität bei 23°C | (mPa.S) | 3100 | 3450 | 3050 | 3900 | 3500 |
| K-Wert (3%ig in Dimethylformamid) | | 22,0 | 23,4 | 22,5 | 22,9 | 22,7 |

*) hergestellt aus 50,4 Gew.% Hydroxyethylacrylat und 49,6 Gew.% ε-Caprolacton; Molverhältnis 1:1

Polyacrylatharz E:

In einem wie oben beschriebenen Reaktionsgefäss wird eine Mischung aus 100 Teilen Ethylglykolacetat, 200 Teilen Xylol und 149 Teilen Glycidylester von α,β-Dialkylalkanmonocarbonsäuren der Bruttoformel $C_{13}H_{24}O_3$ auf 135°C erhitzt. Anschliessend wird bei dieser Temperatur ein Gemisch aus 101 Teilen Methylmethacrylat, 94 Teilen Hydroxyethylmethacrylat, 111 Teilen Styrol, 44 Teilen Acrylsäure, 1,5 Teilen t-Dodecylmercaptan und 5 Teilen Di-tert.-Butylperoxid im Verlauf von 2 Stunden mit konstanter Zulaufgeschwindigkeit zugetropft und die Harzlösung noch 6 Stunden bei 135°C nachreagieren lassen. Die Polymerisatlösung mit einem Festkörpergehalt von 60% wird mit Xylol auf 50% Feststoffgehalt verdünnt und besitzt eine Auslaufzeit von 250 sec im DIN-Becher 4 bis 23°C. Weitere Kennzahlen: OH-Zahl (bez. auf fest): 150, Säurezahl 7, K-Wert: 23,9.

Verwendete Polyisocyanate:

Zur Herstellung der erfindungsgemässen Überzüge werden folgende Polyisocyanatkomponenten (B) eingesetzt:

Polyisocyanat I:

Isocyanuratgruppenhaltiges Polyisocyanat mit vorwiegend cycloaliphatisch gebundenen Isocyanatgruppen auf Basis von Isophorondiisocyanat, 70%ig in Xylol/Ethylenglykolacetat 1:1; NCO-Gehalt ca. 12%.

Polyisocyanat II:

Biuretgruppenhaltiges Polyisocyanat mit aliphatisch gebundenen Isocyanatgruppen auf Basis Hexamethylendiisocyanat, 75%ig in Xylol/Ethylglykolacetat 1:1; NCO-Gehalt = ca. 16,5%.

Polyisocyanat III:

Isocyanuratgruppenhaltiges Polyisocyanat mit aliphatisch gebundenen Isocyanatgruppen auf Basis von Hexamethylendiisocyanat, lösungsmittelfrei; NCO-Gehalt = ca. 22%.

1. Prüfung unpigmentierter Zweikomponenten-Reaktionslacke

Die obengenannten Polyacrylatharze A bis G werden, wie in Tabelle 2 angegeben, mit den Mischungen aus den Polyisocyanaten I bis III kombiniert und die Eigenschaften der hieraus erhaltenen Klarlackfilme bestimmt.

Dazu werden jeweils 500 Teile der Copolymerisatlösungen mit Festkörpergehalten von ca. 62% für die Beispiele 1 bis 9, die Vergleichsbeispiele 10 und 11 sowie 14 und 15 und ca. 50% für die Vergleichsbeispiele 11 und 12 mit den in der Tabelle 2 angegebenen stöchiometrischen Mengen der Polyisocyanatkomponenten I bis III sorgfältig vermischt und anschliessend mit n-Butylacetat auf Spritzviskosität (Auslaufzeit 20 sec, DIN-Becher 4 bis 23°C) verdünnt. Zu den Vergleichsbeispielen 10, 12 und 14 wird zusätzlich noch je eine Formulierung unter Katalysatorzugabe (30 Teile 1%ige Lösung von Dibutylzinndilaurat in n-Butylacetat, entsprechend 0,07% fest/fest, und 46 Teile 4%ige Lösung von Calciumoctoat in n-Butylacetat, entsprechend 0,43% fest/fest) hergestellt. Die Mischungen werden anschliessend auf Stahlbleche mit einer Trockenschichtdicke von 40 bis 50 µm aufgespritzt. Die Härtung der Lackschichten erfolgt entweder 1 Tag und 7 Tage bei Raumtemperatur oder nach 30 Minuten Ablüften bei Raumtemperatur sowohl 30 Minuten als auch 60 Minuten bei 80°C im Umluftofen. Für die Härtung von 7 Tagen bei Raumtemperatur und 60 Minuten bei 80°C werden jeweils die Pendelhärte nach König, die Kratzfestigkeit und Erichsentiefung, für die Härtung von 1 Tag bei Raumtemperatur die Pendelhärte nach König und für 30 Minuten bei 80°C die Pendelhärte und die Erichsentiefung geprüft. Die Prüfergebnisse sind in Tabelle 2 zusammengefasst.

Wie aus Tabelle 2 hervorgeht, zeigen die erfindungsgemäss hergestellten Klarlackfilme ohne Verwendung von Katalysator gleichzeitig rasche Härtung, hohe Endhärte, Kratzfestigkeit und Elastizität sowohl bei Raumtemperaturtrocknung als auch bei forcierter Trocknung. Die entsprechend aus Polyacrylatharzen gemäss Stand der Technik und einer Mischung aus isocyanuratgruppenhaltigem Polyisocyanat auf Basis von Isophorondiisocyanat (Polyisocyanat I) und Biuretgruppen enthaltendem Polyisocyanat auf Basis von Hexamethylendiisocyanat (Polyisocyanat II) erhaltenen Filme (s. Vergleichsbeispiele 10 bis 15) zeigen – auch bei Einsatz hoher Katalysatormengen ein erheblich ungünstigeres Eigenschaftsspektrum als die erfindungsgemässen Überzüge: beispielsweise entweder bei guter Elastizität einen relativ langsamen Härteanstieg und mässige Endhärte bzw. Kratzfestigkeit oder bei verbesserter Härte und Kratzfestigkeit teilweise unzureichende Elastizität.

Tabelle 2

| Beispiel Nr. *) | Klarlackmischungen | | | | Eigenschaften der Weisslackfilme | | | | | | | | | |
|---|---|---|---|---|---|---|---|---|---|---|---|---|---|---|
| | | | | | Härtung bei Raumtemperatur | | | | Härtung bei 80°C | | | | | |
| | Acrylatharzlösung | Polyisocyanat (Teile) | | | 1 Tag | 7 Tage | | | 30 min | | | 60 min | | |
| | | I | II | III | PH (sec) | PH (sec) | KF | ET (mm) | PH (sec) | KF | ET (mm) | PH (sec) | KF | ET (mm) |
| 1 | A | 173 | 18 | | 134 | 170 | 1 | 8,4 | 197 | 0–1 | 8,2 | 197 | 0 | 7,5 |
| 2 | A | 150 | 18 | | 133 | 168 | 0 | 8,1 | 196 | 0 | 8,0 | 196 | 0 | 7,7 |
| 3 | A | 127 | 51 | | 147 | 165 | 1 | 8,5 | 190 | 1 | 8,3 | 192 | 0–1 | 8,2 |
| 4 | A | 150 | | 26 | 137 | 173 | 0–1 | 8,6 | 195 | 0–1 | 8,3 | 198 | 0 | 7,8 |
| 5 | B | 144 | 34 | | 125 | 176 | 0 | 9,1 | 199 | 0 | 9,0 | 199 | 0 | 8,9 |
| 6 | B | 144 | | 25 | 130 | 178 | 0–1 | 9,0 | 202 | 1 | 9,1 | 199 | 0 | 8,6 |
| 7 | C | 147 | 34 | | 127 | 178 | 0–1 | 9,2 | 200 | 0–1 | 9,1 | 203 | 0 | 9,2 |
| 8 | C | 147 | | 25 | 133 | 181 | 1 | 9,1 | 203 | 1 | 9,2 | 202 | 0–1 | 8,7 |
| 9 | F | 147 | 34 | | 120 | 175 | 0 | 10,2 | 198 | 0 | 10,5 | 205 | 0 | 9,0 |
| 10 | D | 144 | 34 | | 31 | 112 | 3 | 9,8 | 115 | 3 | 10,0 | 136 | 2–3 | 6,3 |
| 11 | wie 10; nur mit Katalysatorzusatz = **) | | | | 103 | 152 | 2 | 4,5 | 145 | 2–3 | 5,0 | 170 | 1 | 2,3 |
| 12 | E | 178 | 42 | | 95 | 185 | 1 | 1 | 203 | 1 | 1 | 200 | 0 | 2,7 |
| 13 | wie 12; nur mit Katalysatorzusatz = **) | | | | 130 | 195 | 0 | 1 | 197 | 0 | 1,3 | 205 | 0 | 5,0 |
| 14 | G | 147 | 34 | | 93 | 160 | 2–3 | 3,4 | 155 | 2–3 | 4,0 | 178 | 1–2 | 6,5 |
| 15 | wie 14; nur mit Katalysatorzusatz = **) | | | | 112 | 165 | 1–2 | 5,8 | 172 | 1–2 | 6,8 | 180 | 0 | 6,0 |

*) Beispiele 10 bis 15 sind Vergleichsbeispiele

**) Katalysiert mit 30 Teilen 1%iger Lösung von Dibutylzinndilaurat in n-Butylacetat/46 Teilen 4%iger Lösung von Calciumoctoat in n-Butylacetat

Abkürzungen:
PH: Pendelhärte nach König (sec) gemäss DIN 53 157
KF: Kratzfestigkeit, Benotung 0–5 gemäss DIN 53 230
ET: Erichsentiefung (mm) gemäss DIN 53 156

2. Prüfung der pigmentierten Zweikomponenten-Reaktionslacke (entsprechend Beispielen 1 bis 9 und Vergleichsbeispielen 10–15)

500 Teile der Copolymerisatlösungen mit Festkörpergehalten von ca. 62% für die Beispiele 1 bis 9, die Vergleichsbeispiele 10 bis 11, sowie 14 und 15 und von ca. 50% für die Vergleichsbeispiele 12 und 13 werden mit 440 Teilen Titandioxid (Rutil) und 150 Teilen eines Lösungsmittelgemisches von n-Butylacetat/Xylol/Ethylglykolacetat 4:4:2 zu einem Lack angerieben. Zu dem pigmentierten Lackansatz werden jeweils die in Tabelle 2 angegebenen stöchiometrischen Mengen an Polyisocyanatmischung zugegeben und die erhaltenen Lacke mit dem oben angegebenen Lösungsmittelgemisch auf Spritzviskosität (Auslaufzeit 20 sec, DIN-Becher 4 bis 23°C) verdünnt. Für die Vergleichsbeispiele 11, 13 und 15 wird zusätzlich noch je eine Formulierung unter Zugabe eines Katalysatorgemisches aus 30 Teilen 1%iger Lösung von Dibutylzinndilaurat (entsprechend 0,07% fest auf Bindemittel) und 46 Teilen 4%iger Lösung von Calciumoctoat in n-Butylacetat (entsprechend 0,43% fest auf Bindemittel) hergestellt. Die Lacke werden anschliessend mit einer Trockenschichtdicke von ca. 50 µm auf Stahlbleche aufgespritzt. Die lackierten Bleche werden 30 Minuten bei Raumtemperatur abgelüftet und anschliessend 60 Minuten bei 80°C im Umluftofen, ausserdem 7 Tage beim Raumtemperatur getrocknet. Es wird jeweils die Pendelhärte nach König gemäss DIN 53 157, die Kratzfestigkeit gemäss DIN 53 230, die Erichsentiefung nach DIN 53 156 sowie die Superbenzinfestigkeit (jeweils nach Tröcknung von 60 Minuten bei 80°C, und nach 4 Tagen Raumtemperaturtrocknung) der gehärteten Lackfilme, ausserdem das pot life der fertigen Lackmischungen geprüft, wobei hierunter die Zeit bis zur Gelierung der auf Spritzviskosität eingestellten Lösungen bei 23°C verstanden wird.

Tabelle 3

| Beispiel Nr. *) | pot live**) (h) | Eigenschaften der Weisslackfilme | | | | | | | |
|---|---|---|---|---|---|---|---|---|---|
| | | Härtung 60 min bei 80°C | | | | Härtung bei Raumtemperatur | | | |
| | | | | | | 7 Tage | | | BF (nach 4 Tagen) |
| | | PH (sec) | KF | ET (mm) | BF | PH (sec) | KF | ET (mm) | |
| 1 | 23 | 157 | 0 | 7,2 | 0 | 145 | 0 | 7,5 | 0 |
| 2 | 22 | 153 | 0–1 | 8,0 | 0–1 | 140 | 0–1 | 8,0 | 0 |
| 3 | 18 | 153 | 0–1 | 8,5 | 0 | 138 | 0–1 | 9,2 | 0 |
| 4 | 25 | 158 | 0 | 7,8 | 0–1 | 140 | 0–1 | 8,3 | 0–1 |
| 5 | 25 | 158 | 0–1 | 7,9 | 0 | 145 | 0 | 8,0 | 0–1 |
| 6 | 26 | 162 | 0 | 8,4 | 0 | 135 | 0 | 7,8 | 0–1 |
| 7 | 23 | 160 | 0 | 8,0 | 0 | 143 | 0 | 8,2 | 1 |
| 8 | 22 | 165 | 0 | 7,7 | 0 | 150 | 0 | 7,5 | 0–1 |
| 9 | 23 | 157 | 0 | 8,6 | 0 | 145 | 0 | 9,6 | 0 |
| 10 | >50 | 90 | 3 | 10,4 | 5 | 65 | 3 | 10,5 | 5 |
| 11 | 5 | 153 | 1 | 4,8 | 1–2 | 115 | 3 | 8,5 | 3–4 |
| 12 | 45 | 164 | 0 | 2,9 | 0–1 | 148 | 0 | 1 | 1 |
| 13 | 20 | 158 | 0 | 3,8 | 0 | 151 | 0 | 1 | 0–1 |
| 14 | 50 | 131 | 2 | 8,9 | 3–4 | 135 | 2 | 8,3 | 3–4 |
| 15 | 7 | 155 | 1 | 5,8 | 2 | 161 | 1 | 6,0 | 2–3 |

*) Beispiele 10 bis 15 sind Vergleichsbeispiele
**) Zeit in Stunden bis zur Gelierung der auf Spritzviskosität (ca. 20 sec. Auslaufzeit für DIN-Becher 4 bis 23°C) eingestellten Lacke

Abkürzungen:
PH: Pendelhärte nach König (sec) gemäss DIN 53 157
KF: Kratzfestigkeit, Benotung 0–5 gemäss DIN 53 230
ET: Erichsentiefung (mm), gemäss DIN 53 156
BF: Superbenzinfestigkeit

Zur Prüfung der Superbenzinfestigkeit lässt man einen mit Superbenzin getränkten Wattebausch 5 Minuten auf den gehärteten Lackfilm einwirken, wobei die Watte während dieser Zeit mit einem Glasschälchen abgedeckt wird. Nach Entfernen des Wattebauschs wird 35 Minuten abgelüftet und anschliessend bewertet (Benotung 0 bis 5 entsprechend DIN 53 230).

Die Prüfergebnisse sind in Tabelle 3 zusammengefasst. Die pigmentierten Lacke der Beispiele 1 bis 9 und der Vergleichsbeispiele 10 bis 15 ergeben hochglänzende glatte Lackschichten. Aus Tabelle 3 geht eindeutig hervor, dass die erfindungsgemässen Lackmischungen ohne Katalysatorzugabe sehr rasch zu harten, kratzfesten Filmen hoher Elastizität und hervorragender Superbenzinbeständigkeit aushärten und gleichzeitig verarbeitungsgerechte Topfzeiten ergeben. Vergleichsbeispiel 10 ergibt zwar Lackschichten hoher Elastizität, aber viel zu niedriger Härte,

Kratzfestigkeit und Superbenzinbeständigkeit. Starke Katalysierung des entsprechenden Lackes führt zu ausreichenden Härten und Elastizitäten der Filme, aber teilweise immer noch unzureichender Kratzfestigkeit und Benzinbeständigkeit, sowie nicht mehr verarbeitungsgerechter Topfzeit (5 h) der Lackmischung (s. Vergleichsbeispiel 11). Die ohne und mit Katalysierung erhaltenen Schichten der Vergleichsbeispiele 12 und 13 zeigen einerseits gute Endhärte, Kratzfestigkeit sowie Superbenzinfestigkeit, andererseits wiederum völlig unzureichende Elastitzität. Vergleichsbeispiel 14 ergibt Schichten ausreichender Härte und hoher Elastizität, jedoch mässiger Kratzfestigkeit und unzureichender Benzinfestigkeit, während die katalysierte Einstellung (Vergleichsbeispiel 15) eine viel zu kurze Topfzeit und immer noch zu geringe Superbenzinfestigkeit der Filme zeigt.

**Patentansprüche**

1. Verfahren zur Herstellung von Überzügen auf der Basis von Umsetzungsprodukten von
(A) Polyhydroxypolyacrylatharzen aus Estern der Acrylsäure und/oder Methacrylsäure mit monofunktionellen aliphatischen Alkoholen, Monoestern der Acrylsäure und/oder Methacrylsäure mit polyfunktionellen aliphatischen Alkoholen und anderen copolymerisierbaren olefinisch ungesättigten Monomeren mit
(B) gegebenenfalls teilweise oder vollständig mit CH-, NH- oder OH-aciden Blockierungsmitteln verkappten, Isocyanurat- und gegebenenfalls Biuretgruppen aufweisenden Polyisocyanaten einer Funktionalität zwischen 2,5 und 6,
dadurch gekennzeichnet, dass man als Polyhydroxypolyacrylatharze (A) hydroxylgruppenhaltige Copolymerisate aus
a) 6 bis 70 Gew.% mindestens eines Esters der allgemeinen Formel

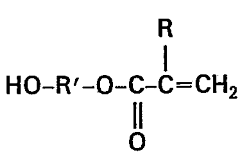

wobei
R für Wasserstoff oder eine Methylgruppe,
R′ für einen gerad- oder verzweigtkettigen Alkylenrest mit 2 bis 18 C-Atomen oder einen bis zu drei cycloaliphatische Gruppen enthaltenden Alkylenrest mit 7 bis 17 C-Atomen stehen, und die Gruppierung HO-R′- gegebenenfalls teilweise oder vollständig durch die Gruppierung Z-O-R′- ersetzt sein kann, worin Z für einen Rest der allgemeinen Formel

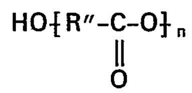

steht, wobei n für eine ganze Zahl von 1 bis 3 steht, und R″ eine 4 bis 8 Kohlenstoffatome enthaltende Alkylenkette bedeutet, welche gegebenenfalls zusätzlich 1 bis 3 Alkylsubstituenten mit insgesamt nicht mehr als 10 Kohlenstoffatomen und/oder einen cycloaliphatischen Rest mit 6 bis 10 Kohlenstoffatomen und/oder einen, gegebenenfalls alkylsubstituierten, aromatischen Rest mit 6 bis 8 Kohlenstoffatomen und/oder einen araliphatischen Rest mit 7 bis 9 Kohlenstoffatomen und/oder einen 1 bis 8 Kohlenstoffatome enthaltenden Alkoxyrest aufweist,
b) 0 bis 50 Gew.% eines oder mehrerer Hydroxyalkylester der Acrylsäure und/oder Methacrylsäure der allgemeinen Formel

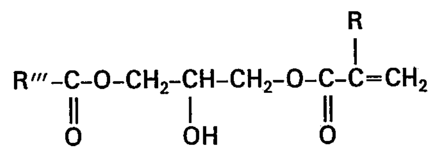

wobei
R für Wasserstoff oder eine Methylgruppe,
R‴ für den Alkylrest einer verzweigten aliphatischen Carbonsäure mit 4 bis 26 C-Atomen stehen,
c) 10 bis 50 Gew.% mindestens eines Alkylesters der Acrylsäure und/oder Methacrylsäure, der Homopolymerisate mit Glasübergangstemperaturen von +5°C bis +120°C bildet,
d) 0 bis 10 Gew.% eines Vinylaromaten,
e) 10 bis 60 Gew.% mindestens eines Alkylesters und/oder bis zu 2 Ethersauerstoffbrücken enthaltenden Alkylglykolesters der Acrylsäure und/oder Methacrylsäure, der Homopolymerisate mit Glasübergangstemperaturen von −80°C bis +4,5°C bildet,
f) 0 bis 10 Gew.% eines Amides der Acrylsäure und/oder Methacrylsäure, das gegebenenfalls am Amidstickstoff einen oder zwei Alkylreste mit 1 bis 8 Kohlenstoffatomen, die gegebenenfalls eine Carbonylgruppe enthalten können, oder einen oder zwei Phenylreste als Substituenten trägt,
g) 1 bis 25 Gew.% mindestens einer polymerisierbaren, olefinisch ungesättigten, heterocyclischen Verbindung der allgemeinen Formeln (I) bis (VIII)

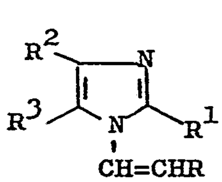

(I)

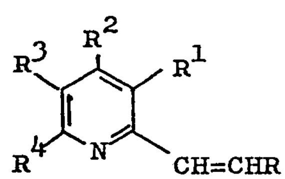

(II)

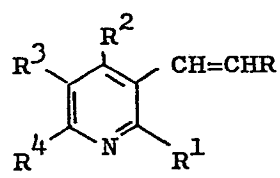

(III)

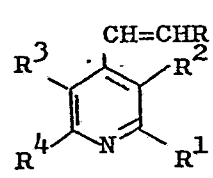

(IV)

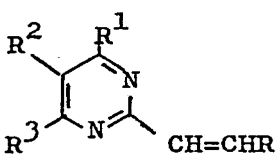

(V)

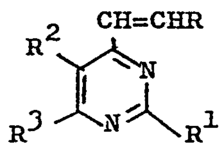

(VI)

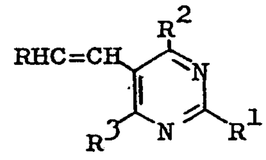

(VII)

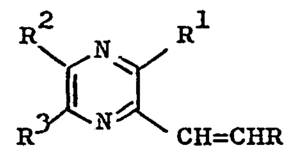

(VIII)

wobei
R für Wasserstoff oder eine Methylgruppe steht,
$R^1$, $R^2$, $R^3$ und $R^4$ untereinander gleich oder verschieden sind und jeweils für Wasserstoff, eine Methyl- oder Ethylgruppe, einen gerad- oder verzweigtkettigen Alkylrest mit 3 bis 4 C-Atomen, einen gegebenenfalls durch eine Alkylgruppe mit 1 bis 4 C-Atomen, durch Halogen oder eine Nitrogruppe substituierten Phenylrest, eine Gruppe der allgemeinen Formel $-R^I-A-R^{II}$
worin
A Sauerstoff oder Schwefel,
$R^I$ eine Methylen-, Ethylen- oder gegebenenfalls durch eine Alkylgruppe mit 1 bis 4 C-Atomen, durch Halogen oder eine Nitrogruppe substituierte Phenylengruppe und
$R^{II}$ eine Methyl-, Ethyl- oder gegebenenfalls durch eine Alkylgruppe mit 1 bis 4 C-Atomen, durch Halogen oder eine Nitrogruppe substituierte Phenylgruppe bedeuten,
eine Halogen- oder Nitrogruppe, sowie eine Gruppe der allgemeinen Formeln $-OR^{III}$, $-COOR^{III}$, $-SO_2R^{III}$, $-CONR^{III}R^{IV}$,
worin
$R^{III}$ und $R^{IV}$ untereinander gleich oder verschieden sind und jeweils eine Methyl- oder Ethylgruppe, einen gerad- oder verzweigtkettigen Alkylrest mit 3 bis 4 C-Atomen oder einen gegebenenfalls durch eine Alkylgruppe mit 1 bis 4 C-Atomen, durch Halogen oder eine Nitrogruppe substituierten Phenylrest bedeuten, stehen
und ausserdem in den Formeln (I), (II), (III), (V), (VI) und (VIII) $R^2$ und $R^3$ oder in der Formel (III) $R^3$ und $R^4$, in den Formeln (II) und (IV) $R^3$ und $R^4$ oder $R^1$ und $R^2$, sowie in den Formeln (II) und (IV) sowohl $R^3$ und $R^4$ als auch $R^1$ und $R^2$ gemeinsam mit dem Heterocyclus einen anellierten, gegebenenfalls durch eine Alkylgruppe mit 1 bis 4 C-Atomen, durch Halogen oder eine Nitrogruppe substituierten aromatischen Sechsring bilden können.
h) 0 bis 20 Gew.% unter (a) bis (g) nicht genannter Monomerer, deren einpolymerisierte Reste gegenüber Isocyanatgruppen inert sind,
mit der Massgabe, dass die Summe der unter (a) und (b) genannten Prozentzahlen 6 bis 70, die Summe der unter (c), (d) und (g) genannten Prozentzahlen 11 bis 60 und die Summe der Prozentzahlen der unter (a) bis (h) genannten Komponenten 100 beträgt, und als Isocyanurat- und gegebenenfalls Biuretgruppen aufweisende Polyisocyanate (B) einer Funktionalität zwischen 2,5 und 6 ein Gemisch aus
(B1) 60 bis 99 Gew.% solcher Polyisocyanate, die Isocyanuratgruppen und vorwiegend cycloaliphatisch gebundene Isocyanatgruppen aufweisen und
(B2) 1 bis 40 Gew.% Biuretgruppen und/oder Isocyanuratgruppen enthaltender Polyisocyanate mit vorwiegend aliphatisch gebundenen Isocyanatgruppen, wobei die Summe der unter (B1) und (B2) genannten Prozentzahlen 100 beträgt und/oder ein isocyanuratgruppenhaltiges Polyisocyanat, welches
1) 60 bis 99 Gew.% eines Diisocyanates mit mindestens einer cycloaliphatisch gebundenen Isocyanatgruppe und
2) 1 bis 40 Gew.% eines aliphatischen Diisocyanates,
eingebaut enthält, wobei die Summe der unter 1) und 2) genannten Prozentzahlen 100 ergibt, verwendet.

2. Verfahren gemäss Anspruch 1, dadurch gekennzeichnet, dass man als cycloaliphatisches isocyanuratgruppenhaltiges Polyisocyanat (B1) ein aus 3-Isocyanatomethyl-3,5,5-trimethyl-cyclohexylisocyanat (= Isophorondiisocyanat) als monomerem Diisocyanat erhaltenes Produkt verwendet.

3. Verfahren nach Anspruch 1 oder 2, dadurch gekennzeichnet, dass man als biuretgruppenhaltiges Polyisocyanat (B2) mit vorwiegend aliphatisch gebundenen Isocyanatgruppen ein aus Hexamethylendiisocyanat als monomerem Diisocyanat erhaltenes Produkt verwendet.

4. Verfahren nach einem der vorhergehenden Ansprüche, dadurch gekennzeichnet, dass man als Komponente (B2) 1 bis 30 Gew.% des biuretgruppenhaltigen Polyisocyanats auf Basis von Hexamethylendiisocyanat verwendet.

5. Verfahren nach einem der vorhergehenden Ansprüche, dadurch gekennzeichnet, dass man als isocyanuratgruppenhaltiges Polyisocyanat (B2) mit vorwiegend aliphatisch gebundenen Isocyanatgruppen ein aus Hexamethylendiisocyanat als monomerem Diisocyanat erhaltenes Produkt verwendet.

6. Verfahren nach einem der vorhergehenden Ansprüche, dadurch gekennzeichnet, dass man als Komponente (B2) 1 bis 30 Gew.% des isocyanuratgruppenhaltigen Polyisocyanats auf Basis von Hexamethylendiisocyanat verwendet.

7. Verfahren nach Anspruch 1, dadurch gekennzeichnet, dass man als isocyanuratgruppenhaltiges Polyisocyanat (B) mit vorwiegend cycloaliphatisch gebundenen Isocyanatgruppen ein Produkt verwendet, welches 1) 60 bis 99 Gew.% Isophorondiisocyanat und 2) 1 bis 40% Hexamethylendiisocyanat eingebaut enthält, mit der Massgabe, dass die Summe der unter 1) und 2) genannten Prozentzahlen100 beträgt.

8. Verfahren nach Anspruch 7, dadurch gekennzeichnet, dass man ein Polyisocyanat verwendet, welches 1) 70 bis 98 Gew.% Isophorondiisocyanat und 2) 2 bis 30% Hexamethylendiisocyanat eingebaut enthält, mit der Massgabe, dass die Summe der unter 1) und 2) genannten Prozentzahlen 100 beträgt.

9. Verfahren nach einem der vorhergehenden Ansprüche, dadurch gekennzeichnet, dass die Hydroxylzahlen der hydroxylgruppenhaltigen Copolymerisate (A) zwischen 30 und 250 liegen.

10. Verfahren nach einem der vorhergehenden Ansprüche, dadurch gekennzeichnet, dass die Hydroxylzahlen der hydroxylgruppenhaltigen Copolymerisate (A) zwischen 50 und 150 liegen.

11. Verfahren nach einem der vorhergehenden Ansprüche, dadurch gekennzeichnet, dass als Komponente (a) des hydroxylgruppenhaltigen Copolymerisats Hydroxyethyl- und/oder 2-Hydroxypropylacrylat und/oder -methacrylat eingesetzt werden.

12. Verfahren nach einem der vorhergehenden Ansprüche, dadurch gekennzeichnet, dass als Komponente (a) des hydroxylgruppenhaltigen Copolymerisates Butandiol-1,4- und/oder Hexandiol-1,6-monoacrylat und/oder -monomethacrylat eingesetzt werden.

13. Verfahren nach einem der vorhergehenden Ansprüche, dadurch gekennzeichnet, dass als Komponente (a) des hydroxylgruppenhaltigen Copolymerisates die Umsetzungsprodukte von Hydroxyethylacrylat und/oder -methacrylat und/oder 2-Hydroxypropylacrylat und/oder -methacrylat und/oder Butandiol-1,4- und/oder Hexandiol-1,6-monoacrylat und/oder -monomethacrylat mit, gegebenenfalls durch 1 bis 3 Alkylreste mit insgesamt nicht mehr als 10 C-Atomen substituiertem, ε-Caprolacton im Molverhältnis von 1,5:1 bis 1:3 eingesetzt werden.

14. Verfahren nach Anspruch 13, dadurch gekennzeichnet, dass als Komponente (a) des hydroxylgruppenhaltigen Copolymerisates die Umsetzungsprodukte von Hydroxyethylacrylat und/oder -methacrylat und/oder 2-Hydroxypropylacrylat und/oder -methacrylat und/oder Butandiol-1,4-monoacrylat und/oder -methacrylat mit ε-Caprolacton im Molverhältnis von 1,5:1 bis 1:3 eingesetzt werden.

15. Verfahren nach einem der vorhergehenden Ansprüche, dadurch gekennzeichnet, dass als Komponenten (a) des hydroxylgruppenhaltigen Copolymerisates Mischungen aus 1 bis 99 Gew.% der in den Ansprüchen 13 und 14 genannten Umsetzungsprodukte mit 99 bis 1 Gew.% Hydroxyethylacrylat und/oder -methacrylat und/oder Butandiol-1,4-monoacrylat und/oder -methacrylat eingesetzt werden.

16. Verfahren nach einem der vorhergehenden Ansprüche, dadurch gekennzeichnet, dass als Komponente (g) des hydroxylgruppenhaltigen Copolymerisats mindestens ein N-Vinylimidazol der Formel (Ia)

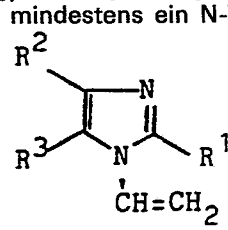

(Ia)

wobei $R^1$, $R^2$ und $R^3$ jeweils für Wasserstoff, eine Methyl- und Ethylgruppe, einen gerad- oder verzweigtkettigen Alkylrest mit 3 bis 4 C-Atomen oder einen Phenylrest stehen, eingesetzt werden.

17. Verfahren nach Anspruch 16, dadurch gekennzeichnet, dass für das hydroxylgruppenhaltige Copolymerisat 2 bis 20 Gew.% der Komponente (g) eingesetzt werden.

18. Verfahren nach einem der vorhergehenden Ansprüche, dadurch gekennzeichnet, dass man die Mengenverhältnisse der Reaktionskomponenten (A) und (B) so wählt, dass das Äquivalentverhältnis von gegebenenfalls teilweise oder vollständig mit CH-, NH- oder OH-aciden Blockierungsmitteln verkappten Isocyanatgruppen zu reaktionsfähigen Hydroxylgruppen zwischen 0,25:1 und 4:1 liegt.

19. Verfahren nach einem der vorhergehenden Ansprüche, dadurch gekennzeichnet, dass als Blockierungsmittel für das gegebenenfalls teilweise oder vollständig verkappte Polyisocyanat ein monofunktionelles Ketoxim eingesetzt wird.

20. Verfahren nach einem der vorhergehenden Ansprüche, dadurch gekennzeichnet, dass als Blockierungsmittel für das Polyisocyanat Dimethylketoxim oder Methylethylketoxim verwendet wird.

21. Metallteil, das nach einem Verfahren gemäss einem der vorhergehenden Ansprüche mit einem Überzug versehen ist.

## Claims

1. A process for the production of a coating based on a reaction product of
(A) a polyhydroxypolyacrylate resin obtained from an ester of acrylic acid or methacrylic acid with a monofunctional aliphatic alcohol, or a mixture of esters of acrylic acid and methacrylic acid with monofunctional aliphatic alcohols, a monoester of acrylic acid or methacrylic acid with a polyfunctional aliphatic alcohol, or a mixture of monoesters of acrylic acid and methacrylic acid with polyfunctional aliphatic alcohols, and other copolymerizable olefinically unsaturated monomers,
with
(B) a polyisocyanate which is unblocked or partially or completely blocked with CH-, NH- or OH-acidic blocking agents, contains isocyanurate groups and may or may not containin biuret groups and has a functionality of from 2.5 to 6,
wherein the polyhydroxypolyacrylate resin (A) used comprises hydroxyl-containing copolymers consisting of
a) from 6 to 70% by weight of one or more esters of the general formula

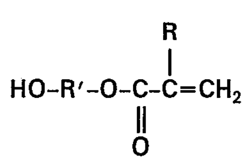

where
R is hydrogen or methyl, and
R′ is a straight-chain or branched alkylene radical of 2 to 18 carbon atoms or alkylene of 7 to 17 carbon atoms which contains one, two or three cycloaliphatic groups, and some or all of the HO–R′-groups can be replaced by Z–O–R′-groups, where Z is a radical of the general formula Z is a radical of the general formula

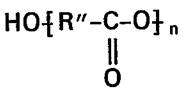

where n is a integer from 1 to 3 and R″ is an alkylene chain of 4 to 8 carbon atoms which may additionally contain 1 to 3 alkyl substituents with a total of not more than 10 carbon atoms and/or a cycloaliphatic radical of 6 to 10 carbon atoms and/or an unsubstituted or alkyl-substituted aromatic radical of 6 to 8 carbon atoms and/or an araliphatic radical of 7 to 9 carbon atoms and/or an alkoxy radical of 1 to 8 carbon atoms,
b) from 0 to 50% by weight of one or more hydroxyalkyl esters of acrylic acid or methacrylic acid of the general formula

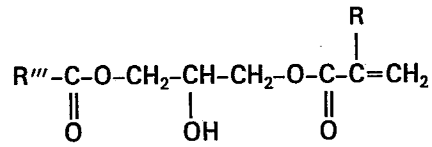

where
R is hydrogen or methyl, and
R‴ is the alkyl radical of a branched aliphatic carboxylic acid of 4 to 26 carbon atoms,
c) from 10 to 50% by weight of one or more alkyl esters of acrylic acid and/or methacrylic acid, which form homopolymers having a glass transition temperature of from +5 to +120°C,
d) from 0 to 10% by weight of a vinylaromatic,
e) from 10 to 60% by weight of one or more alkyl esters and/or alkylglycol esters of acrylic acid and/or methacrylic acid, which form homopolymers which have a glass transition temperature of from −80 to +4.5°C, the alkylglycol esters containing not more than 2 ether oxygen bridges,
f) from 0 to 10% by weight of an acrylamide and/or methacrylamide which may or may not be substituted at the amide nitrogen by one or two alkyl radicals of 1 to 8 carbon atoms which may or may not contain a carbonyl group, or by one or two phenyl radicals,
g) from 1 to 25% by weight of one or more polymerizable olefinically unsaturated heterocyclic compounds of the general formula (I) to (VIII)

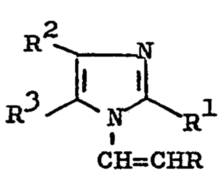
(I)

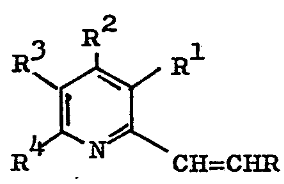
(II)

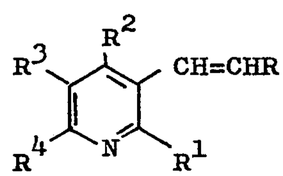
(III)

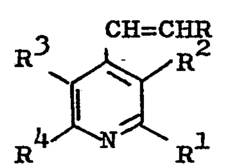
(IV)

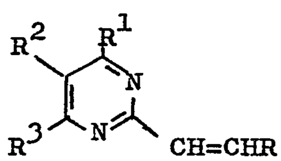
(V)

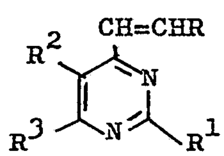
(VI)

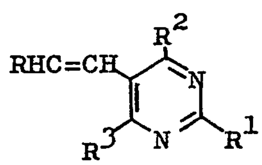
(VII)

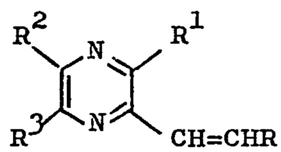
(VIII)

where
R is hydrogen or methyl,
$R^1$, $R^2$, $R^3$ and $R^4$ are identical or different and are each hydrogen, methyl, ethyl, a straight-chain or branched alkyl radical of 3 or 4 carbon atoms, or phenyl which is unsubstituted or substituted by alkyl of 1 to 4 carbon atoms or by halogen or nitro, or are each a group of the general formula $-R^{I}-A-R^{II}$,
where
A is oxygen or sulfur,
$R^{I}$ is methylene or ethylene or is phenylene which is unsubstituted or substituted by alkyl of 1 to 4 carbon atoms or by halogen or nitro, and
$R^{II}$ is methyl or ethyl, or is phenyl which is unsubstituted or substituted by alkyl of 1 to 4 carbon atoms or by halogen or nitro,
or are each halogen or nitro, or a group of the general formulae $-OR^{III}$, $-COOR^{III}$, $-SO_2R^{III}$, $-CONR^{III}R^{IV}$ or $-SO_2NR^{III}R^{IV}$,
where
$R^{III}$ and $R^{IV}$ are identical or different and are each methyl, ethyl, a straight-chain or branched alkyl radical of 3 or 4 carbon atoms, or phenyl which is unsubstituted or substituted by alkyl of 1 to 4 carbon atoms or by halogen or nitro,
and furthermore in the formulae (I), (II), (III), (V), (VI) and (VIII) $R^2$ and $R^3$, or in the formula (III) $R^3$ and $R^4$, or in the formulae (II) and (IV) $R^3$ and $R^4$ or $R^1$ and $R^2$, or in the formulae (II) and (IV) $R^3$ and $R^4$ and $R^1$ and $R^2$, together with the heterocyclic ring, can form a fused aromatic six-membered ring which is unsubstituted or substituted by alkyl of 1 to 4 carbon atoms or by halogen or nitro, and
h) from 0 to 20% by weight of monomers which are not stated under (a) to (g) and whose copolymerized radicals are inert to isocyanate groups, with the proviso that the sum of the percentages stated under (a) and (b) is from 6 to 70, the sum of the percentages stated under (c), (d), and (g) is from 11 to 60, and the sum of the percentages of the components stated under (a) to (h) is 100, and the polyisocyanate (B) used, which contains isocyanurate groups, may or may not contain biuret groups and has a functionality of from 2.5 to 6, comprises a mixture of

(B1) from 60 to 99% by weight of an isocyanurate-containing polyisocyanate which possesses predominantly cycloaliphatically bonded isocyanate groups, and

(B2) from 1 to 40% by weight of a polyisocyanate which contains biuret or isocyanurate groups or both biuret and isocyanurate groups and possesses predominantly aliphatically bonded isocyanate groups, the sum of the percentages stated under (B1) and (B2) being 100, and/or an isocyanurate-containing polyisocyanate which contains, as copolymerized units,

1) from 60 to 99% by weight of a diisocyanate possessing one or more cycloaliphatically bonded isocyanate groups, and

2) from 1 to 40% by weight of an aliphatic diisocyanate, the sum of the percentages stated under 1) and 2) being 100.

2. A process as claimed in claim 1, wherein a product obtained from 3-isocyanatomethyl-3,5,5-trimethylcyclohexyl isocyanate (isophorone diisocyanate), as the diisocyanate monomer, is used as the cycloaliphatic isocyanurate-containing polyisocyanate (B1).

3. A process as claimed in claim 1 or 2, wherein a product obtained from hexamethylene diisocyanate, as the diisocyanate monomer, is used as the polyisocyanate (B2) which contains biuret groups and possesses predominantly aliphatically bonded isocyanate groups.

4. A process as claimed in any of the preceding claims, wherein from 1 to 30% by weight of the biuret-containing polyisocyanate based on hexamethylene diisocyanate is used as component (B2).

5. A process as claimed in any of the preceding claims, wherein a product obtained from hexamethylene diisocyanate, as the diisocyanate monomer, is used as the isocyanurate-containing polyisocyanate (B2) possessing predominantly aliphatically bonded isocyanate groups.

6. A process as claimed in any of the preceding claims, wherein from 1 to 30% by weight of the isocyanurate-containing polyisocyanate based on hexamethylene diisocyanate is used as component (B2).

7. A process as claimed in claim 1, wherein a product which contains, as copolymerized units, 1) from 60 to 99% by weight of isophorone diisocyanate and 2) from 1 to 40% by weight of hexamethylene diisocyanate is used as the isocyanurate-containing polyisocyanate (B) possessing predominantly cycloaliphatically bonded isocyanate groups, with the proviso that the sum of the percentages stated under 1) and 2) is 100.

8. A process as claimed in claim 7, wherein the polyisocyanate used contains, as copolymerized units, 1) from 70 to 98% by weight of isophorone diisocyanate and 2) from 2 to 30% by weight of hexamethylene diisocyanate, with the proviso that the sum of the percentages stated under 1) and 2) is 100.

9. A process as claimed in any of the preceding claims, wherein the hydroxyl number of the hydroxyl-containing copolymer (A) is from 30 to 250.

10. A process as claimed in any of the preceding claims, wherein the hydroxyl number of the hydroxyl-containing copolymer (A) is from 50 to 150.

11. A process as claimed in any of the preceding claims, wherein hydroxyethyl acrylate, hydroxyethyl methacrylate, 2-hydroxypropyl acrylate or 2-hydroxypropyl methacrylate, or a mixture of these compounds, is used as component (a) of the hydroxyl-containing copolymer.

12. A process as claimed in any of the preceding claims, wherein butane-1,4-diol monoacrylate, butane-1,4-diol monomethacrylate, hexane-1,6-diol monoacrylate or hexane-1,6-diol monomethacrylate, or a mixture of these compounds, is used as component (a) of the hydroxyl-containing copolymer.

13. A process as claimed in any of the preceding claims, wherein component (a) of the hydroxyl-containing copolymer is a reaction product of hydroxyethyl acrylate, hydroxyethyl methacrylate, 2-hydroxypropyl acrylate, 2-hydroxypropyl methacrylate, butane-1,4-diol monoacrylate, butane-1,4-diol monomethacrylate, hexane-1,6-diol monoacrylate or hexane-1,6-diol monomethacrylate, or a mixture of these compounds, with ε-caprolactone which is unsubstituted or substituted by 1 to 3 alkyl radicals possessing a total of not more than10 carbon atoms, the reactants being used in a molar ratio of from 1.5:1 to 1:3.

14. A process as claimed in claim 13, wherein component (a) of the hydroxyl-containing copolymer is a reaction product of hydroxyethyl acrylate, hydroxyethyl methacrylate, 2-hydroxypropyl acrylate, 2-hydroxypropyl methacrylate, butane-1,4-diol monoacrylate or butane-1,4-diol monomethacrylate, or a mixture of these compounds, with ε-caprolactone, the reactants being used in a molar ratio of from 1.5:1 to 1:3.

15. A process as claimed in any of the preceding claims, wherein a mixture of from 1 to 99% by weight of the reaction products stated in claims 13 and 14 with from 99 to 1% by weight of hydroxyethyl acrylate, hydroxyethyl methacrylate, butane-1,4-diol monoacrylate or butane-1,4-diol monomethacrylate, or a mixture of these compounds, is used as component (a) of the hydroxyl-containing copolymer.

16. A process as claimed in any of the preceding claims, wherein one or more N-vinylimidazoles of the formula (Ia)

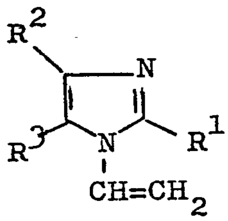

(Ia)

where $R^1$, $R^2$ and $R^3$ are each hydrogen, methyl, ethyl, a straight-chain or branched alkyl radical of 3 or 4 carbon atoms or phenyl, are used as component (g) of the hydroxyl-containing copolymer.

17. A process as claimed in claim 16, wherein from 2 to 20% by weight of component (g) is used for the hydroxyl-containing copolymer.

18. A process as claimed in any of the preceding claims, wherein the relative proportions of the reactants (A) and (B) are so chosen that the ratio of the number of equivalents of isocyanate groups which are unblocked or partially or completely blocked with CH-, NH- or OH-acidic blocking agents to the number of equivalents of reactive hydroxyl groups is from 0.25:1 to 4:1.

19. A process as claimed in any of the preceding claims, wherein a monofunctional ketoxime is used as the blocking agent for the partially or completely blocked polyisocyanate.

20. A process as claimed in any of the preceding claims, wherein dimethyl ketoxime or methyl ethyl ketoxime is used as the blocking agent for the polyisocyanate.

21. A metal part which has been provided with a coating by a process as claimed in any of the preceding claims.

**Revendications**

1. Procédé de préparation de revêtements à base de produits de réaction de

(A) résines polyhydroxypolyacrylates d'esters d'acide acrylique et/ou acide méthacrylique avec des alcools aliphatiques monofonctionnels, de monoesters d'acide acrylique et/ou acide méthacrylique avec des alcools aliphatiques polyfonctionnels et autres monomères insaturés oléfiniquement copolymérisables, avec

(B) des polyisocyanates d'une fonctionnalité comprise entre 2,5 et 6, possédant des groupes isocyanurate et éventuellement des groupes biuret, et éventuellement masqués partiellement ou totalement avec des agents de blocage acides -CH, -NH ou -OH

caractérisé par le fait que l'on utilise, comme résines polyhydroxypolyacrylates (A), des copolymérisats à groupes hydroxyle constitués de

a) 6 à 70% en poids d'au moins un ester de formule générale

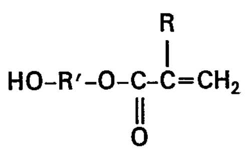

où

R est mis pour hydrogène ou un groupe méthyle, R′ pour un reste alkylène droit ou ramifié ayant 2 à 18 atomes C ou un reste alkylène de 7 à 17 atomes C contenant jusqu'à trois groupes cycloaliphatiques, et le groupement HO-R′- pouvant être éventuellement remplacé, partiellement ou totalement, par le groupement Z-O-R′- où Z est mis pour un reste de formule générale

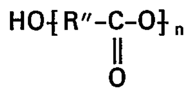

n étant mis pour un nombre entier de 1 à 3 et R″ pour une chaîne alkylène contenant 4 à 8 atomes de carbone et qui contient éventuellement additionnellement 1 à 3 substituants alkyle ayant au total pas plus de 10 atomes de carbone et/ou un reste cycloaliphatique de 6 à 10 atomes de carbone et/ou un reste aromatique de 6 à 8 atomes de carbone éventuellement substitué par alkyle et/ou un reste araliphatique de 7 à 9 atomes de carbone et/ou un reste alcoxy contenant 1 à 8 atomes de carbone,

b) 0 à 50% en poids d'un ou de plusieurs esters hydroxyalkyliques de l'acide acrylique et/ou méthacrylique de formule générale

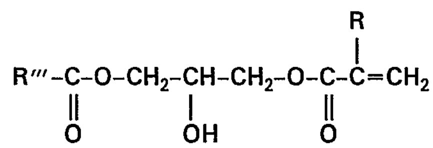

où

R est mis pour hydrogène ou un groupe méthyle R‴ pour le reste alkyle d'un acide carboxylique aliphatique ramifié de 4 à 26 atomes C,

c) 10 à 50% en poids d'au moins un ester alkylique de l'acide acrylique et/ou méthacrylique, qui forme des homopolymérisats, à température de transition vitreuse de +5°C à +120°C

d) 0 à 10% en poids d'un aromate vinylique

e) 10 à 60% en poids d'au moins un ester alkylique et/ou un ester alkylglycolique, contenant jusqu'à 2 ponts éther-oxygène, de l'acide acrylique et/ou méthacrylique, qui forme des homopolymérisats à température de transition vitreuse de −80°C à +4,5°C

f) 0 à 10% en poids d'un amide de l'acide acrylique et/ou méthacrylique qui porte éventuellement, comme substituants, un ou deux restes alkyle de 1 à 8 atomes de carbone, qui peuvent éventuellement contenir un groupe carbonyle, ou un ou deux restes phényle,

g) 1 à 25% en poids d'au moins un composé hétérocyclique insaturé oléfiniquement, polymérisable, de formules générales (I) à (VIII)

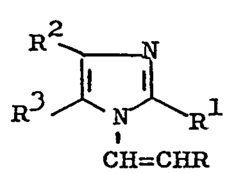

(I),

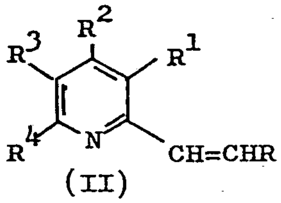
(II)

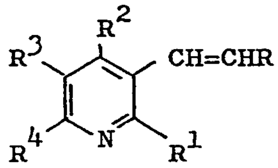
(III)

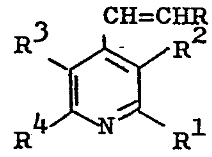
(IV)

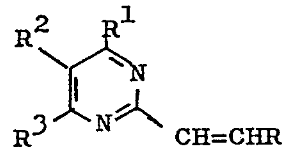
(V)

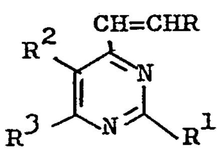
(VI)

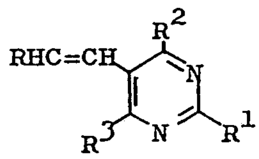
(VII)

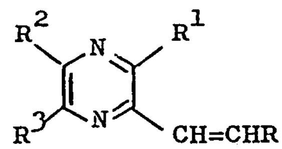
(VIII)

dans lesquelles
R représente hydrogène ou un groupe méthyle,
$R^1$, $R^2$, $R^3$ et $R^4$ sont identiques ou différents les uns des autres et représentent chacun hydrogène, un groupe méthyle ou éthyle, un reste alkyle de 3 à 4 atomes C, droit ou ramifié, un reste phényle éventuellement substitué par un groupe alkyle de 1 à 4 atomes C, par halogène ou un groupe nitro, un groupe de formule générale $-R^I-A-R^{II}$,
où
A représente oxygène ou soufre,
$R^I$ un groupe méthylène, éthylène ou phénylène, éventuellement substitué par un groupe alkyle de 1 à 4 atomes C, par halogène ou un groupe nitro et
$R^{II}$ représente un groupe méthyle, éthyle ou phényle éventuellement substitué par un groupe alkyle de 1 à 4 atomes C, par halogène ou un groupe nitro, un groupe halogène ou nitro, ainsi qu'un groupe de formules générales $-OR^{III}$, $-COOR^{III}$, $-SO_2R^{III}$, $-CONR^{III}R^{IV}$ ou $-SO_2NR^{III}R^{IV}$,
où
$R^{III}$ et $R^{IV}$ sont identiques ou différents et sont mis chacun pour un groupe méthyle ou éthyle, un reste alkyle droit ou ramifié ayant 3 à 4 atomes C ou un reste phényle éventuellement substitué par un groupe alkyle de 1 à 4 atomes C, par halogène ou un groupe nitro et, en outre, $R^2$ et $R^3$, dans les formules (I), (II), (III), (V), (VI) et (VIII), ou $R^3$ et $R^4$, dans la formule (III), $R^3$ et $R^4$ ou $R^1$ et $R^2$, dans les formules (II) et (IV), ainsi que, aussi bien $R^3$ et $R^4$ que $R^1$ et $R^2$, dans les formules (II) et (IV), peuvent former avec l'hétérocycle un noyau hexagonal aromatique, condensé, éventuellement substitué par un groupe alkyle de 1 à 4 atomes C, par halogène ou un groupe nitro,
h) 0 à 20% en poids de monomères, non indiqués sous (a) à (g) dont les restes entrés en polymérisation sont inertes vis à vis des groupes isocyanate

sous réserve que la somme des pourcentages indiqués sous (a) et (b) soit de 6 à 70, que la somme des pourcentages indiqués sous (c) (d) et (g) soit de 11 à 60, et que la somme des pourcentages des composants indiqués sous (a) à (h) soit de 100 et que, comme polyisocyanates (b) d'une fonctionnalité comprise entre 2,5 et 6 et possédant des groupes isocyanurate et éventuellement biuret, on utilise un mélange de
(B1) 60 à 99% en poids de tels polyisocyanates qui possèdent des groupes isocyanurate et surtout des groupes isocyanate liés cycloaliphatiquement, et
(B2) 1 à 40% en poids de polyisocyanates contenant des groupes biuret et /ou des groupes isocyanurate, avec surtout des groupes isocyanate liés aliphatiquement, la somme des pourcentages indiqués sous (B1) et (B2) s'élevant à 100 et/ou un polyisocyanate à groupes isocyanurate qui contient, incorporés,
1) 60 à 99% en poids d'un diisocyanate ayant au moins un groupe isocyanate lié cycloaliphatiquement et
2) 1 à 40% en poids d'un diisocyanate aliphatique,
la somme des pourcentages indiqués sous 1) et 2) s'élevant à 100.

2. Procédé selon la revendication 1, caractérisé par le fait que l'on utilise, comme polyisocyanate à groupes isocyanurate, aliphatique (B1), un produit obtenu à partir de 3-isocyanatométhyl-3,5,5-triméthyl-cyclohexylisocyanate (= diisocyanate d'isophorone) comme diisocyanate monomère.

3. Procédé selon la revendication 1 ou 2, caractérisé par le fait que l'on utilise, comme polyisocyanate à groupes biuret (B2) avec surtout des groupes isocyanate liés aliphatiquement, un produit obtenu, à partir de diisocyanate d'hexaméthylène, comme diisocyanate monomère.

4. Procédé selon l'une des revendications précédentes, caractérisé par le fait que l'on utilise, comme composant (B2), 1 à 30% en poids du polyisocyanate à groupes biuret, à base de diisocyanate d'hexaméthylène.

5. Procédé selon l'une des revendications précédentes, caractérisé par le fait que l'on utilise, comme polyisocyanate à groupes isocyanurate (B2) avec surtout des groupes isocyanate liés aliphatiquement, un produit obtenu à partir de diisocyanate d'hexaméthylène, comme diisocyanate monomère.

6. Procédé selon l'une des revendications précédentes, caractérisé par le fait que l'on utilise, comme composant (B2), 1 à 30% en poids du polyisocyanate à groupes isocyanurate, à base de diisocyanate d'hexaméthylène.

7. Procédé selon la revendication 1, caractérisé par le fait que l'on utilise, comme polyisocyanate à groupes isocyanurate (B) avec surtout des groupes isocyanate liés cycloaliphatiquement, un produit qui contient, incorporés, 1) 60 à 99% en poids de diisocyanate d'isophorone et 2) 1 à 40% de diisocyanate d'hexaméthylène sous réserve que la somme des pourcentages indiqués sous 1) et 2) s'élève à 100.

8. Procédé selon la revendication 7, caractérisé par le fait que l'on utilise un polyisocyanate qui contient, incorporés, 1) 70 à 98% en poids de diisocyanate d'isophorone et 2) 2 à 30% en poids de diisocyanate d'hexaméthylène sous réserve que la somme des pourcentages indiqués sous 1) et 2) s'élève à 100.

9. Procédé selon l'une des revendications précédentes, caractérisé par le fait que l'indice d'hydroxyle du copolymérisat à groupes hydroxyle (A) est compris entre 30 et 250.

10. Procédé selon l'une des revendications précédentes, caractérisé par le fait que l'indice d'hydroxyle du copolymérisat à groupes hydroxyle (A) est compris entre 50 et 150.

11. Procédé selon l'une des revendications précédentes, caractérisé par le fait que l'on introduit, comme composant a) du copolymérisat à groupes hydroxyle, de l'acrylate et/ou du méthacrylate d'hydroxyéthyle et/ou 2-hydroxypropyle.

12. Procédé selon l'une des revendications précédentes, caractérisé par le fait que l'on introduit, comme composant a) du copolymérisat à groupes hydroxyle, de l'acrylate et/ou du méthacrylate de butanediol-1,4 et/ou hexanediol-1,6.

13. Procédé selon l'une des revendications précédentes, caractérisé par le fait que l'on introduit, comme composant a) du copolymérisat à groupes hydroxyle, le produit de réaction d'acrylate et/ou méthacrylate d'hydroxyéthyle et/ou acrylate et/ou méthacrylate de 2-hydroxypropyle et/ou monoacrylate et/ou monométhacrylate de butanediol-1,4 et/ou hexanediol-1,6, avec, en rapport molaire de 1,5:1 à 1:3, du ε-caprolactame, éventuellement substitué par 1 à 3 restes alkyle, ayant au total, pas plus de 10 atomes C.

14. Procédé selon la revendication 13, caractérisé par le fait que l'on introduit, comme composant a) du copolymérisat à groupes hydroxyle, le produit de réaction d'acrylate et/ou méthacrylate d'hydroxyéthyle et/ou acrylate et/ou méthacrylate de 2-hydroxypropyle et/ou monoacrylate et/ou monométhacrylate de butanediol-1,4, avec, en rapport molaire de 1,5:1 à 1:3, du ε-caprolactame.

15. Procédé selon l'une des revendications précédentes, caractérisé par le fait que l'on introduit, comme composant a) du copolymérisat à groupes hydroxyle, des mélanges de 1 à 99% en poids des produits de réaction indiqués dans les revendications 13 et 14 avec 99 à 1% en poids d'acrylate et/ou méthacrylate d'hydroxyéthyle et/ou monoacrylate et/ou méthacrylate de butanediol-1,4.

16. Procédé selon l'une des revendications précédentes, caractérisé par le fait que l'on introduit, comme composant a) du copolymérisat à groupes hydroxyle, au moins une N-vinylimidazole de formule (Ia)

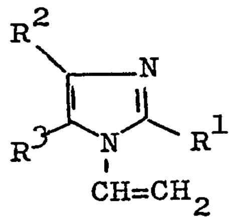

(Ia)

dans laquelle $R^1$, $R^2$ et $R^3$ sont mis, chacun, pour hydrogène, un groupe méthyle et éthyle, un reste alkyle droit ou ramifié ayant 3 à 4 atomes C ou un reste phényle.

17. Procédé selon la revendication 16, caractérisé par le fait que, pour le copolymérisat à groupes hydroxyle, on introduit 2 à 20% en poids du composant g).

18. Procédé selon l'une des revendications précédentes, caractérisé par le fait que l'on choisit les rapports en quantités des composants de réaction (A) et (B) de telle sorte que le rapport en équivalents des groupes isocyanate éventuellement masqués partiellement ou totalement avec des agents de blocage acides en CH, -NH ou -OH, aux groupes hydroxyle réactifs soit compris entre 0,25:1 et 4:1.

19. Procédé selon l'une des revendications précédentes, caractérisé par le fait que, comme agent de blocage pour le polyisocyanate éventuellement masqué partiellement ou totalement, on introduit une cétoxime monofonctionnelle.

20. Procédé selon l'une des revendications précédentes, caractérisé par le fait que, comme agent de blocage pour le polyisocyanate, on utilise de la diméthylcétoxime ou méthyléthylcétoxime.

21. Partie métallique qui est munie d'un revêtement par un procédé selon l'une des revendications précédentes.